# EUROPÄISCHE PATENTSCHRIFT

(11) **EP 3 352 341 B1**
(45) Veröffentlichungstag und Bekanntmachung des Hinweises auf die Patenterteilung: **30.07.2025**
(21) Anmeldenummer: 18152601.3
(22) Anmeldetag: 19.01.2018
(51) Int. Cl.: H02K 3/28, H02K 3/52, H02K 15/095

(54) **STATORPAKET UND VERFAHREN ZUM HERSTELLEN EINES STATORPAKETS**
STATOR AND METHOD FOR MANUFACTURING A STATOR
STATOR ET PROCÉDÉ DE FABRICATION D'UN STATOR

(30) Priorität: 20.01.2017 LU 100025
(43) Veröffentlichungstag der Anmeldung: 25.07.2018
(73) Patentinhaber: Ovalo GmbH, 65555 Limburg (DE)
(72) Erfinder:
(74) Vertreter: Hoffmann, Jürgen

(56) Entgegenhaltungen:
- EP-A2- 1 276 208
- WO-A1-03/081755
- DE-A1- 10 152 499
- DE-A1- 102010 049 620
- DE-A1- 102013 201 820
- DE-A1- 102014 201 637
- DE-A1- 102015 208 210
- DE-A1- 102015 208 414
- DE-U1- 202009 000 415
- DE-U1- 202009 011 270
- FR-A1- 3 004 867
- US-A1- 2012 025 662
- US-A1- 2015 137 637
- NEUBAUER ANDREAS ET AL: "Optimized winding and connection concept for an integrated BLDC-motor drive", 2014 4TH INTERNATIONAL ELECTRIC DRIVES PRODUCTION CONFERENCE (EDPC), IEEE, 30 September 2014 (2014-09-30), pages 1 - 7, XP032704469, ISBN: 978-1-4799-5008-9, [retrieved on 20141212], DOI: 10.1109/EDPC.2014.6984394

## Beschreibung

Die Erfindung betrifft ein Verfahren zum Herstellen eines Statorpakets, das ein in Umfangsrichtung vollständig geschlossenes Grundelement mit mehreren Statorzähnen aufweist, wobei auf jeden Statorzahn (P) mindestens eine Spule aufgewickelt ist, wobei alle Spulen mit demselben ununterbrochenen Wickeldraht gewickelt werden und wobei jeweils nach dem Aufwickeln einer Spule aus Wickeldraht auf einen der Statorzähne, ohne den Wickeldraht zu durchtrennen, eine nächste Spule aus dem ununterbrochenen Wickeldraht auf einen nächsten Statorzahn aufgewickelt wird.

Die Erfindung betrifft außerdem ein Verfahren zum Herstellen eines Stators unter Verwendung eines solchen Statorpakets.

Die Erfindung betrifft außerdem ein Statorpaket, das ein in Umfangsrichtung vollständig geschlossenes Grundelement mit mehreren Statorzähnen aufweist, wobei auf jeden Statorzahn mindestens eine Spule aus Wickeldraht aufgewickelt ist, wobei alle Spulen mit demselben ununterbrochenen Wickeldraht gewickelt sind.

Aus DE 21 2006 000 034 U1 ist ein Stator für einen elektronisch kommutierten Elektromotor mit einem zylinderförmigen Mantel und mehreren nach innen, gegen die Zylinderachse gerichteten Polen aus ferromagnetischem Material bekannt, wobei die Pole einen zylinderförmigen Hohlraum zur Aufnahme eines Rotors umschließen. Jeder Pol ist mit einer Wicklung mit mehreren Drahtwindungen versehen. Die Windungen der Wicklungen sind ohne Unterbruch nacheinander um die Pole gewickelt angeordnet. Die Kontaktierung zur Beschaltung der Wicklungsanordnung und die Zusammenführung der Wicklungen zu einer dreiphasigen Anordnung mit drei Wicklungsanschlüssen erfolgt über einen Kontaktring mit elektrischen Leitern. Die Herstellung eines solchen Stators ist umständlich. Darüber hinaus benötigt ein solcher Stator viel Bauraum.

Aus EP 1 276 208 A2 ist ein Stator für einen Elektromotor oder einen Generator und ein Verfahren zum Wickeln des Stators bekannt. Das aus dieser Druckschrift bekannte Verfahren hat u.a. zum Ziel, eine hohe Raumausnutzung zu erreichen. Die Anordnung erfordert grundsätzlich nicht, dass die Wicklungsnadel in dem Schlitz zwischen den Polen hin- und herbewegt wird, sondern verwendet stattdessen isolierende Einsätze, die an den axialen Flächen der Pole außerhalb der Spalte angeordnet sind, um den Draht von einem Ende zum anderen zu führen. In einer Ausführungsform ändert der isolierende Einsatz effektiv die Umfangslänge der Spulenwicklung, die in einer axialen Richtung entlang ihrer Länge abnimmt.

Aus WO 03/081755 A1 ist und aus US 2015/0137637 A1 sind hinsichtlich des Grundaufbaus ähnliche Statoren bekannt.

DE 10 2010 049 620 A1 offenbart eine Statorbaueinheit für mehrphasige Maschinen mit einer Vielzahl von einzeln mit Spulen bewickelten weichmagnetischen Statorsegmenten, die mit einem Joch verbindbar sind. Die Spulen einer Phase sind in Reihe geschaltet, wobei die Statorsegmente einer Phase eine Statorsegmentkette bilden.

DE 10 2014 201 637 A1 offenbart ein Verfahren zum Herstellen eines Stators, der mehrere Statorpole und wenigstens eine Stromschiene zum elektrischen Verbinden der Enden der Wicklungen unterschiedlicher Statorpole aufweist. Das Verfahren zeichnet sich dadurch aus, dass die Stromschiene mehrteilig ausgebildet ist und mehrere Halteteile, an denen jeweils wenigstens ein Wickeldraht fixierbar ist, und ein Verbindungsteil zum elektrischen Verbinden der Halteteile aufweist, und dass zeitlich vor einem Wickelvorgang zunächst die Halteteile an einem Trägerbauteil angeordnet werden und anschließend der Wickelvorgang erfolgt, bei dem wenigstens ein Wickeldraht auf Statorzähnen aufgewickelt und an den Halteteilen fixiert wird. Zeitlich nach dem Wickelvorgang wird die Stromschiene dadurch zusammengesetzt, dass die Halteteile mittels des Verbindungsteils elektrisch leitend verbunden werden. DE 10 2014 201 637 A1 offenbart außerdem eine Stromschiene für einen Stator und einen Stator, sowie einen Elektromotor mit einer solchen Stromschiene.

DE 10 2013 201 820 A1 offenbart einen Stator, der mehrere Kernbildungsabschnitte aufweist, von denen jeder mehrere Jochbildungsabschnitte umfasst, die ein ringförmiges Joch konfigurieren und in einer umfänglichen Richtung des Jochs segmentiert sind, und der mehrere Zahnabschnitte aufweist, welche von den jeweiligen Jochbildungsabschnitten entlang einer radialen Richtung des Jochs vorragen, wobei die Zahnabschnitte in die Jochbildungsabschnitte integriert sind. Außerdem umfasst der Stator mehrere Spulendrähte, welche auf die jeweiligen Zahnabschnitte gewickelt sind, um mehrere Wicklungsabschnitte zu konfigurieren, sowie mehrere Isolatoren, welche jeweils mehrere Isolatorabschnitte umfassen, die in jedem der jeweiligen Kernbildungsabschnitte integriert sind und zwischen den Zahnabschnitten und den Wicklungsabschnitten eine Isolierung bilden, sowie einen Verbindungsabschnitt, welcher die mehreren Isolatorabschnitte zusammen verbindet.

US 2012/0025662 A1 offenbart einen elektrischen Motor, der als Außenrotator ausgebildet ist und der einen Stator und einen Rotor beinhaltet. Der Stator beinhaltet einen Statorkern mit einer Vielzahl von Zähnen, Spulen und Isolatoren, die die Spulen halten. Die Isolatoren sind in einer ringförmigen Konfiguration miteinander verbunden, so dass die Zähne in die Isolatoren eingeführt sind. Jeder der Isolatoren weist einen Grundkörper und einen äußeren peripheren Flansch auf. Jeder der Isolatoren enthält außerdem ein Kontaktplättchen an mindestens einem von zwei axialen Gratabschnitten. Die axialen Gratabschnitte enthalten Verklebungsabschnitte zwischen dem Grundkörper und dem äußeren peripheren Flansch. Die Kontaktplättchen umfassen jeweils eine rotorbezogene Oberfläche mit Blick auf den Rotor und eine zahnkontaktierende Oberfläche.

DE 101 52 499 A1 offenbart einen Elektromotor mit einem Innenrotor und einem Außenstator. Der Rotor weist mehrere permanentmagnetische Polschuhe auf. Die Statorwicklungen werden von Stator-Polschenkeln getragen, die radial innen den Rotor-Polschuhen zugewandte Stator-Polschuhe aufweisen. Die Stator-Polschuhe sind über einen Kurzschlusssteg mit den benachbarten Stator-Polschuhen verbunden, so dass alle Stator-Polschenkel einstückig miteinander ausgebildet sind. Durch das Vorsehen von Kurzschlussstegen zwischen den Stator-Polschuhen steht ein einstückiger Stator-Grundkörper zur Verfügung, der von radial außen mit einem einzigen durchgehenden Wickeldraht bewickelt werden kann.

DE 20 2009 011 270 U1 offenbart eine Endkappenvorrichtung für einen Wickelkern einer elektrischen Maschine, insbesondere für einen Statorkern einer elektrischen Maschine. Es wird vorgeschlagen, eine Endkappenvorrichtung für einen Wickelkern einer elektrischen Maschine, insbesondere für einen Statorkern einer elektrischen Maschine, welche zumindest einen Wickelaufnahmebereich mit wenigstens einem Bodenbereich und wenigstens zwei seitlich angeordneten Begrenzungswänden, sowie zumindest eine Leitungshaltereinrichtung zur Halterung eines elektrischen Leiters in wenigstens einem Leitungsführungsbereich aufweist, wobei wenigstens eine Durchgangsausnehmung zwischen dem Wickelaufnahmebereich und dem Leitungsführungsbereich der Leitungshalteeinrichtung vorgesehen ist, derart auszubilden, dass die Durchgangsausnehmung innerhalb der Länge des Bodenbereichs des Wickelaufnahmebereichs angeordnet ist. Mit Hilfe der Endkappenvorrichtung ist es möglich, den elektrischen Leiter in einem definierten Bereich zu wickeln.

DE 10 2015 208 210 A1 offenbart einen elektronisch kommutierten Gleichstrommotor mit einem Innenrotor und einem dreiphasigen Stator, welcher einen geschlossenen Rückschlussring, eine Vielzahl von mit diesem einstückigen, nach innen gerichteten Statorpolen und einen Isolierstoffkörper aufweist, welcher die Statorpole durch Polabdeckungen und den Rückschlussring durch eine Rückschlussringabdeckung axial bedeckt und der Isolierstoffkörper aus der Rückschlussringabdeckung achsparallel vorspringende Drahtführungsmittel aufweist, welche durch Drahtdurchführungen unterbrochen sind. Es sind zumindest drei einander benachbarte Drahtumlenkmittel aus der Rückschlussringabdeckung achsparallel vorspringen vorhanden, welche durch Freisparungen voneinander getrennt sind.

DE 20 2009 000 415 U1 offenbart einen elektronisch kommutierten Motor mit einem Rotor und mit einer Statoranordnung, in welcher eine durch die Zahl drei oder ein ganzzahliges Vielfaches hiervon ganzzahlig teilbare Zahl von ausgeprägten Statorpolen vorgesehen ist, denen Spulen zugeordnet sind, welchen zu ihrem elektrischen Anschluss hochkant angeordnete Stromschienen zugeordnet sind, die in einem Isolierteil angeordnet sind. Die Stromschienen sind voneinander isoliert und ineinander geschachtelt.

FR 3 004 867 A1 offenbart ein Isolierelement zum Halten von Wicklungsdrähten für einen Stator einer elektrischen Maschine. Das Isolierelement umfasst einen ringförmigen Träger mit einer gegen eine radiale Stirnfläche des Stators pressbaren inneren Anlagefläche sowie Haken für den Wickeldraht. Die Wickeldrahtabschnitte des Wickeldrahtes kreuzen sich in den Bauräumen zwischen den Statorzähnen und sich zueinander nicht ausschließlich parallel.

Es ist die Aufgabe der vorliegenden Erfindung, ein Verfahren zum Herstellen eines Statorpakets anzugeben, das das Erreichen eines besonders hohen Füllfaktors ermöglicht.

Die Aufgabe wird durch ein Verfahren gelöst, das dadurch gekennzeichnet ist, dass Bewickeln der Statorzähne derart erfolgt, dass die Wickeldrahtabschnitte des Wickeldrahtes in den Bauräumen zwischen den Statorzähnen ausschließlich parallel verlaufen und Kreuzungen von Wickeldrahtabschnitten ausschließlich außerhalb der Bauräume zwischen den Statorzähnen angeordnet sind.

Es ist eine weitere Aufgabe der vorliegenden Erfindung ein Statorpaket anzugeben, dass einen besonders hohen Füllfaktor aufweisen kann.

Die weitere Aufgabe wird durch ein Statorpaket gelöst, das dadurch gekennzeichnet ist, dass Wickeldrahtabschnitte des Wickeldrahtes in den Räumen zwischen den Statorzähnen ausschließlich parallel zueinander verlaufen und Kreuzungen von Wickeldrahtabschnitten ausschließlich außerhalb der Räume zwischen den Statorzähnen angeordnet sind.

Die Erfindung hat den ganz besonderen Vorteil, dass der Bauraum zwischen zwei benachbarten Statorzähnen besonders gut mit einer Vielzahl von Wickeldrahtabschnitten gefüllt werden kann, so dass allenfalls ein geringer Freiraum verbleibt. Hierbei kann insbesondere vorteilhaft ausgenutzt werden, dass die Erfindung die Verwendung eines besonders dünnen Wickeldrahtes erlaubt, was weiter unten im Detail erläutert ist.

In erfindungsgemäßer Weise wurde erkannt, dass bei den aus dem Stand der Technik bekannten Statoren, wie beispielsweise bei dem aus der oben erwähnten Druckschrift EP 1 276 208 A2 bekannten Stator, nachteiliger Weise Bauraum in den Räumen zwischen den Statorzähnen ungenutzt bleibt. Es wurde in erfindungsgemäßer Weise insbesondere erkannt, dass ein noch höherer Füllfaktor dadurch verhindert wird, dass der Wickeldraht dort sich mit sich selbst kreuzend verlegt ist.

Das erfindungsgemäße Statorpaket ermöglicht es, insbesondere auf Grund des besonders hohen Füllfaktors, dass ein damit ausgerüstete Elektromotor einen guten Wirkungsgrad und ein gutes thermisches Verhalten aufweisen kann. Insbesondere kann der Elektromotor bei gleicher Leistungsfähigkeit kompakter ausgebildet sein, als herkömmliche Elektromotore.

Vorzugsweise wird der Wickeldraht mittels eines Nadelwicklers auf die Statorzähne aufgewickelt. Die außerhalb des zwischen zwei benachbarten Statorzähnen Bauraums befindlichen Umlenkstützen haben den besonderen Vorteil, dass der Wickeldraht derart geführt werden kann, dass die Aktions- und Bewegungsmöglichkeiten der Wickelnadel, insbesondere in dem Bereich zwischen benachbarten Statorpolen lediglich in geringem Umfang eingeschränkt wird. Hierbei wird der Wickeldraht nach dem Wickeln jeder Spule vollständig aus dem Bauraum zwischen benachbarten Statorpolen heraus geführt und um eine außerhalb des zwischen zwei benachbarten Statorzähnen befindlichen Bauraums angeordnete Umlenkstütze geführt, bevor mit dem Wickeln der nächsten Spule begonnen wird.

Vorzugsweise sind die Umlenkstützen auch außerhalb der Räume angeordnet, die sich axial an den zwischen benachbarten Statorpolen befindlichen Bauraum anschließen. Alternativ oder zusätzlich kann vorteilhaft vorgesehen sein, dass die Umlenkstützen auch außerhalb der Räume angeordnet, die sich radial nach außen hin an den zwischen benachbarten Statorpolen befindlichen Bauraum direkt oder durch eine Wandung getrennt anschließen.

Wie bereits erwähnt, ist es von besonderem Vorteil, wenn eine Düse der Wickelnadel jeweils nach dem Wickeln einer Spule vollständig aus dem Bauraum zwischen dem gerade bewickelten Statorzahn und dem nächsten Statorzahn heraus und um die außerhalb des Bauraums angeordnete Umlenkstütze geführt wird, bevor sie zum Wickeln einer nächsten Spule auf einen nächsten Statorzahn wieder in einen Bauraum zwischen zwei Statorzähnen eingeführt wird.

Hierbei ist es beispielsweise möglich, dass die Wickelnadel nach dem Wickeln einer Spule vollständig aus dem Bauraum zwischen dem gerade bewickelten Statorzahn und dem nächsten, benachbarten Statorzahn heraus und um die außerhalb des Bauraums angeordnete Umlenkstütze geführt wird und anschließend zum Wickeln der nächsten Spule auf den nächsten Statorzahn wieder in denselben Bauraum zwischen den gerade bewickelten Statorzahn und dem nächsten Statorzahn eingeführt wird. Es ist alternativ auch möglich, dass die Wickelnadel nach dem Wickeln einer Spule vollständig aus dem Bauraum zwischen dem gerade bewickelten Statorzahn und dem nächsten, benachbarten Statorzahn heraus und um die außerhalb des Bauraums angeordnete Umlenkstütze geführt wird und anschließend zum Wickeln der nächsten Spule auf den nächsten Statorzahn in den nächsten Bauraum zwischen dem nächsten Statorzahn und dem übernächsten Statorzahn eingeführt wird.

Im Hinblick auf die Aktions- und Bewegungsmöglichkeiten der Wickelnadel ist es von besonderem Vorteil, dass das Bewickeln der Statorzähne derart erfolgt, dass der Wickeldraht in den Räumen zwischen den Statorzähnen ausschließlich parallel verläuft und/oder dass das Bewickeln der Statorzähne derart erfolgt, dass Kreuzungen von Wickeldrahtabschnitten ausschließlich außerhalb der Bauräume zwischen den Statorzähnen angeordnet sind. Zusätzlich kann vorteilhaft auch vorgesehen sein, dass Kreuzungen von Wickeldrahtabschnitten ausschließlich außerhalb der Räume angeordnet, die sich axial an den zwischen benachbarten Statorpolen befindlichen Bauraum anschließen, und/oder dass Kreuzungen von Wickeldrahtabschnitten ausschließlich außerhalb der Räume angeordnet, die sich radial an den zwischen benachbarten Statorpolen befindlichen Bauraum anschließen. Es ist von Vorteil es zu vermeiden, dass zwei Wickeldrahtabschnitte im Bauraum zwischen zwei Statorzähnen in der Projektion einen von Null Grad oder von 180 Grad verschiedenen Winkel zueinander aufweisen.

Bei einer ganz besonders vorteilhaften Ausführung des erfindungsgemäßen Verfahrens werden auf wenigsten einen Statorzahn mehrere Spulen aufgewickelt. Insbesondere kann vorteilhaft vorgesehen sein, dass auf alle Statorzähne jeweils mehrere Spulen aufgewickelt werden.

Insbesondere können die Spulen, die auf einen Statorzahn aufgewickelt sind, später zueinander parallel geschaltet werden. Hinsichtlich der Wirkung im Betrieb eines Elektromotors gibt es zwischen einer Spule mit x Windungen, die mit einem dickeren Wickeldraht gewickelt ist, und beispielsweise drei parallel geschalteten Spulen, die jeweils ebenfalls x Windungen aufweisen und die mit einem dreimal dünneren Wickeldraht gewickelt sind, keine wesentlichen Unterschiede. Jedoch kann bei Verwendung eines dünneren Wickeldrahts ein höherer Füllfaktor erreicht werden. Hintergrund ist hierbei insbesondere, dass ein dicker Wickeldraht in aller Regel auch eine dickere und damit stabilere Wickelnadel benötigt, die beim Wickeln einen größeren Teil des Bereichs zwischen benachbarten Statorzähne beansprucht. Außerdem wurde erkannt, dass man dicke Wickeldrähte schlecht in Engstellen einlegen kann.

Es ist möglich, sämtliche auf einen Statorzahn aufzuwickelnden (und später parallel zu schaltenden) Spulen unmittelbar nacheinander aufzuwickeln. Es hat sich jedoch gezeigt, dass es, insbesondere auch im Hinblick auf ein automatisiertes Kontaktieren der einzelnen Spulen von besonderem Vorteil ist, in der Weise vorzugehen, dass zeitlich zwischen dem Aufwickeln von zwei Spulen auf einen Statorzahn wenigstens ein anderer Statorzahn mit wenigstens einer Spule bewickelt wird.

Bei einer ganz besonders vorteilhaften Ausführung werden die Statorzähne zunächst mit jeweils einer ersten Spule bewickelt, wobei der Wickeldraht jeweils von der ersten Spule eines Statorzahns zur ersten Spule des nächsten Statorzahns um jeweils mindestens eine erste Umlenkstütze geführt wird, die außerhalb des zwischen zwei benachbarten Statorzähnen befindlichen Bauraums angeordnet ist. Anschließend werden die Statorzähne mit jeweils einer zweiten Spule bewickelt, wobei der Wickeldraht jeweils von der zweiten Spule eines Statorzahns zur zweiten Spule des nächsten Statorzahns um jeweils eine zweite, von der ersten Umlenkstütze verschiedene, Umlenkstütze geführt wird, die außerhalb des zwischen zwei benachbarten Statorzähnen befindlichen Bauraums angeordnet ist.

Im Hinblick auf eine geordnete und platzsparende Wickeldrahtführung ist es von besonderem Vorteil, wenn die ersten Umlenkstützen axial von den zweiten Umlenkstützen beabstandet sind. Alternativ oder zusätzlich kann auch vorgesehen sein, dass die ersten Umlenkstützen und die zweiten Umlenkstützen in unterschiedlichen, axial voneinander beabstandeten Ebenen angeordnet sind.

Alternativ ist es allerdings - stattdessen oder zusätzlich - auch möglich, dass der Wickeldraht zeitlich zwischen dem Wickeln von zwei zweiten Spulen jeweils um dieselben (ersten) Umlenkstützen gelegt wird, wie zuvor beim Wickeln der ersten Spulen. Hierzu sollten die Umlenkstützen in axialer Richtung ausreichend lang ausgebildet sein, damit die einzelnen Wickeldrahtabschnitte axial nebeneinanderliegend von der Umlenkstütze gehalten werden können.

Insbesondere kann vorteilhaft zusätzlich vorgesehen sein, dass die Statorzähne nach dem Aufwickeln der zweiten Spulen mit jeweils einer dritten Spule bewickelt werden, wobei der Wickeldraht jeweils von der dritten Spule eines Statorzahns zur dritten Spule des nächsten Statorzahns um jeweils eine dritte Umlenkstütze geführt wird, die von der ersten und der zweiten Umlenkstütze verschiedenen ist und die außerhalb des zwischen zwei benachbarten Statorzähnen befindlichen Bauraums angeordnet ist.

Auch diesbezüglich ist es möglich, dass die ersten und/oder zweiten Umlenkstützen axial von den dritten Umlenkstützen beanstandet sind und/oder dass die ersten und/oder zweiten Umlenkstützen und die dritten Umlenkstützen in unterschiedlichen, axial voneinander beabstandeten Ebenen angeordnet sind. Allerdings ist es alternativ auch nicht ausgeschlossen, hierbei stattdessen oder zusätzlich Umlenkstützen zu verwenden, um die zuvor bereits ein Wickeldrahtabschnitt gelegt wurde.

Bei der Herstellung eines Stators kann, insbesondere im Hinblick auf eine vollkommen automatisierte Fertigung, vorteilhaft in der Weise vorgegangen werden, dass zunächst ein Statorpaket mit einem erfindungsgemäßen Verfahren hergestellt wird und dass der ununterbrochene Wickeldraht anschließend an mehreren Stellen aufgetrennt und jeweils mehrere Spulen miteinander verschaltet werden.

Insbesondere kann vorteilhaft vorgesehen sein, dass in demselben Bearbeitungsschritt, insbesondere unter Verwendung von Stromschienen, sowohl die jeweils mehreren, auf einen Statorzahn aufgewickelten Spulen zur Bildung jeweils eines Spulensystems zueinander parallel geschaltet werden, als auch eine Sternschaltung der Spulensysteme erfolgt. Insbesondere hierzu können auf das Starterpaket stirnseitig mehrere voneinander isolierte Stromschienen, die Hakenfahnen aufweisen, derart aufgesetzt werden, dass die Hakenfahnen, vorzugsweise jeweils außerhalb des zwischen zwei benachbarten Statorzähnen befindlichen Bauraums verlaufende, Abschnitte des Wickeldrahtes umgreifen. Anschließend können die Hakenfahnen mit den umgriffenen Abschnitten des Wickeldrahtes verschweißt werden. Vorzugsweise erfolgt innerhalb dieses Arbeitsschritts danach das Auftrennen des bis dahin ununterbrochenen Wickeldrahts an den für die gewünschte elektrische Schaltung (beispielsweise Sternschaltung) erforderlichen Stellen.

Bei einer ganz besonders vorteilhaften Ausführung, die einen besonders hohen Füllfaktor ermöglicht, sind die Statorzähne abgestuft ausgebildet. Insbesondere kann vorteilhaft vorgesehen sein, dass die Statorzähne in radialer Richtung abgestuft ausgebildet sind oder dass die Statorzähne Abschnitte unterschiedlichem Umfang aufweisen. Bei einer besonderen Ausführung weisen die Statorzähne Abschnitte unterschiedlichem Umfang auf, wobei die radial weiter innen liegenden Abschnitte einen größeren Durchmesser aufweisen, als die radial weiter außen liegenden Abschnitte.

Ein Stator, der unter Verwendung eines erfindungsgemäßen Statorpakets hergestellt ist, kann im Vergleich zu einem herkömmlichen Stator gleicher Leistungsfähigkeit besonders kompakt ausgebildet sein; dies sowohl im Hinblick auf die axialen, als auch im Hinblick auf die radialen Abmessungen.

Bei einer besonderen Ausführung weist der Stator stirnseitig mehrere, insbesondere genau vier, Stromschienen mit Hakenfahnen auf, wobei die Hakenfahnen jeweils, vorzugsweise außerhalb des zwischen zwei benachbarten Statorzähnen befindlichen Bauraums verlaufende, Abschnitte des Wickeldrahtes umgreifen und mit diesen elektrisch leitend verbunden, insbesondere verschweißt, sind. Besonders kompakt ist eine Ausführung, bei der die Stromschienen in axialer Richtung wenigstens teilweise übereinander angeordnet sind.

Insbesondere im Hinblick auf eine kompakte Bauweise ist ein Elektromotor besonders vorteilhaft, der einen erfindungsgemäßen Stator beinhaltet. Der Elektromotor kann beispielsweise ein dreiphasiger Elektromotor mit Sternschaltung sein. Beispielsweise kann der Elektromotor einen erfindungsgemäßen Stator mit 12 Statorzähnen und einen der Rotor mit 10 oder 14 Magneten aufweisen.

Von besonderem Vorteil ist nach einem eigenständigen Erfindungsgedanken ein Verfahren nach dem Oberbegriff des Anspruchs 1, das die Merkmale des Kennzeichnungsteils des Anspruchs 1 nicht aufweist oder das anstelle des Kennzeichnungsteils des Anspruchs 1 wenigstens ein Merkmal eines der abhängigen Ansprüche aufweist. Ebenso ist nach einem eigenständigen Erfindungsgedanken ein Statorpaket (und ein damit hergestellter Elektromotor) nach dem Oberbegriff des Anspruchs 7 von besonderem Vorteil, dass die Merkmale des Kennzeichnungsteils des Anspruchs 7 nicht aufweist oder das anstelle des Kennzeichnungsteils des Anspruchs 7 wenigstens ein Merkmal eines der abhängigen Ansprüche aufweist.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein erfindungsgemäßes Statorpaket in der Draufsicht bei Blickrichtung in axialer Richtung,

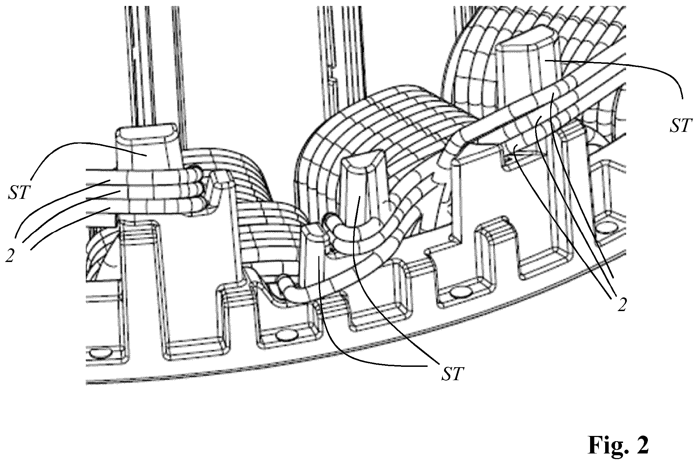

- Fig. 2: eine Detailansicht des erfindungsgemäßen Statorpakets,
- Fig. 3: eine weitere Detailansicht des erfindungsgemäßen Starterpakets,
- Fig. 4: ein erster Teil eines Grundelements,
- Fig. 5: ein zweiter Teil des Grundelements,
- Fig. 6: eine Detailansicht auf das Grundelement,

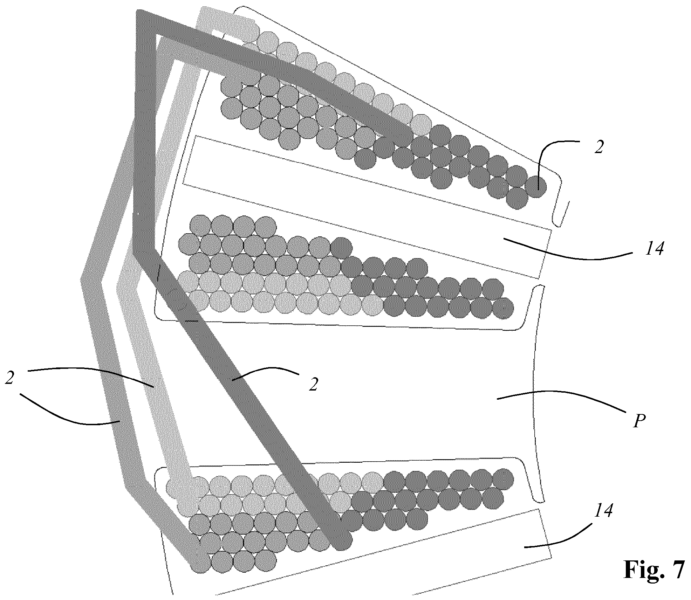

- Fig. 7: eine schematische Darstellung zur Illustration des Wickeldrahtverlaufs,
- Fig. 8: eine schematische Darstellung zur Illustration des Wickeldrahtverlaufs beim Wickeln von ersten Spulen auf die Statorzähne,
- Fig. 9: eine schematische Darstellung zur Illustration des Wickeldrahtverlaufs beim Wickeln von zweiten Spulen auf die Statorzähne,
- Fig. 10: eine schematische Darstellung zur Illustration der Anschlusskontaktierung,
- Fig. 11: in einer Querschnittsdarstellung eine mit einem dicken Wickeldraht gewickelte Spule,
- Fig. 12: in einer Querschnittsdarstellung mehrere, parallel geschaltete und mit einem dünnen Wickeldraht gewickelte Spulen,
- Fig. 13: eine Anordnung von Stromschienen mit Hakenfahnen,
- Fig. 14: eine Illustration der kontaktieren der Wickeldrahtabschnitte im Bereich der Hakenfahnen,
- Fig. 15: eine erste Stromschiene,
- Fig. 16: eine zweite Stromschiene,
- Fig. 17: eine dritte Stromschiene,
- Fig. 18: eine vierte Stromschiene,
- Fig. 19: eine Abdeckvorrichtung zum Abdecken der Stromschienen,
- Fig. 20: die mit der Abdeckvorrichtung abgedeckten Stromschienen,
- Fig. 21: eine schematische Darstellung zur Illustration des Wickeldrahtverlaufs beim Wickeln von ersten Spulen auf die Statorzähne,
- Fig. 22: eine schematische Darstellung zur Illustration des Wickeldrahtverlaufs beim Wickeln von zweiten und dritten Spulen auf die Statorzähne,
- Fig. 23: eine schematische Darstellung zur Illustration der Kontaktierung der Spulen,
- Fig. 24: schematisch die Schaltung der Spulensysteme in einer Sternschaltung,
- Fig. 25: eine schematische Illustration der Verschaltung der auf die einzelnen Statorzähne gewickelten Spulensysteme.

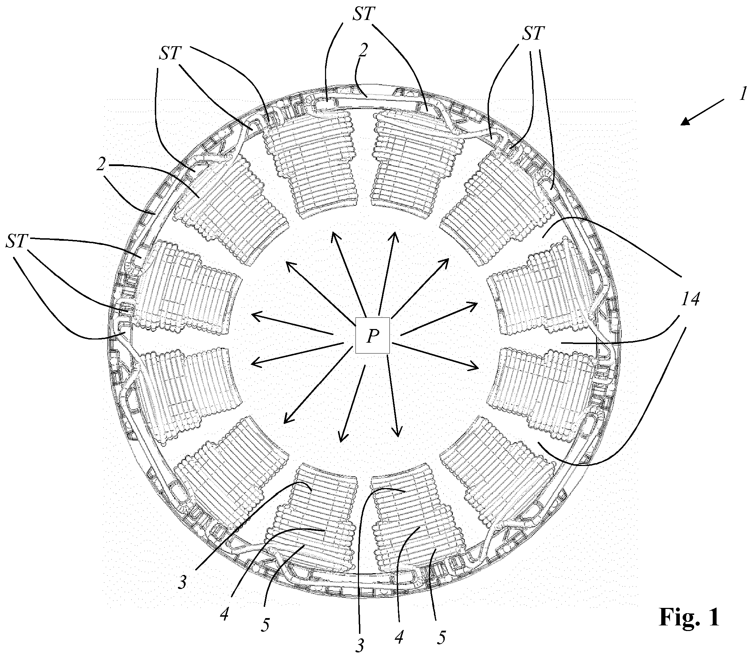

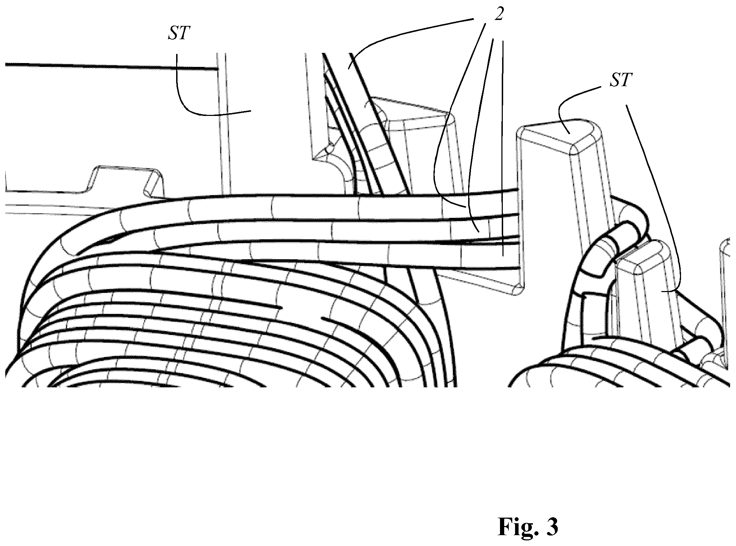

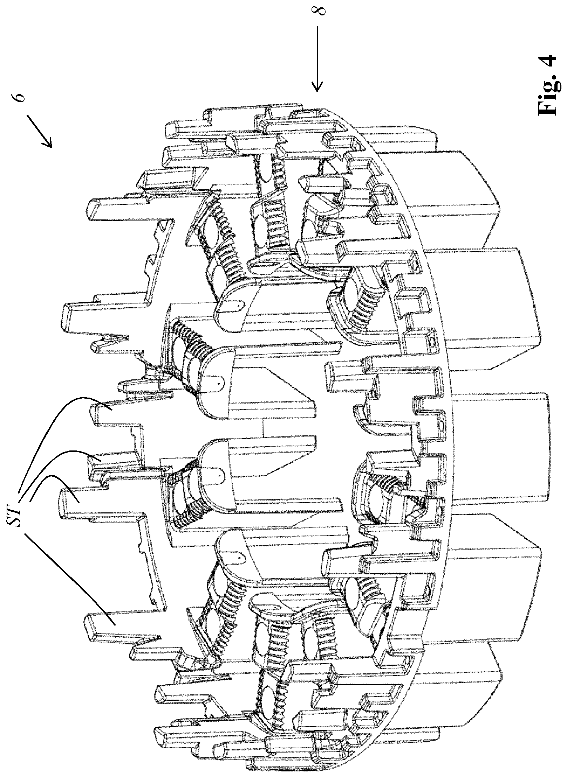

Fig. 1 zeigt ein Statorpaket 1, das 12 Statorzähne P mit jeweils einer ersten Spule 3, einer zweiten Spule 4 und einer dritten Spule 5 aus Wickeldraht 2 aufweist, wobei alle Spulen 3, 4, 5 mit demselben, ununterbrochenen Wickeldraht 2 gewickelt sind. Es ist zu erkennen, dass der Wickeldraht 2 nicht unmittelbar von einem Statorzahn P zum nächsten Statorzahn P verläuft. Vielmehr ist der Wickeldraht 2 um jeweils mindestens eine Umlenkstütze ST gelegt, die außerhalb des zwischen zwei benachbarten Statorzähnen P befindlichen Bauraums 14 angeordnet ist. Dies ist insbesondere in den Detailansichten der Figuren 3 und 4 zu erkennen.

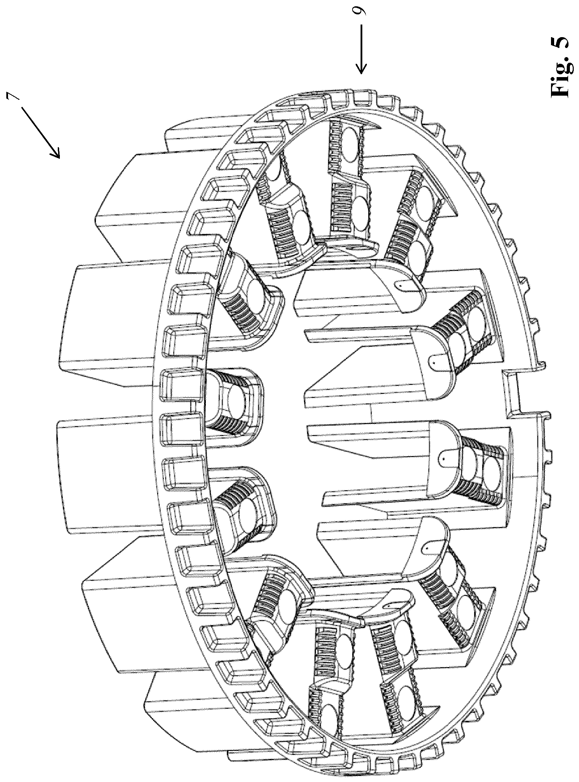

Das Statorpaket 1 weist ein Grundelement auf, das aus zwei Teilen zusammengesetzt ist. Figur 4 zeigt einen ersten Teil 6 eines Grundelements. Figur 5 zeigt einen zweiten Teil 7 eines Grundelements. Das Grundelement beinhaltet insbesondere die Statorzähne P, auf die der Wickeldraht 2 gewickelt wird. Außerdem weist der erste Teil 6 des Grundelements die Umlenkstützen ST auf. Der erste Teil 6 des Grundelements weist einen ersten Haltering 8 auf, an dem die Umlenkstützen ST ausgebildet sind und der erste Hälften der Statorzähne P trägt. Der zweite Teil 7 des Grundelements weist einen zweiten Haltering 9 auf, der zweite Hälften der Statorzähne P trägt.

Sowohl der erste Teil 6 des Grundelements, als auch der zweite Teil 7 des Grundelements können vorteilhaft als Kunststoffspritzgußteile hergestellt sein.

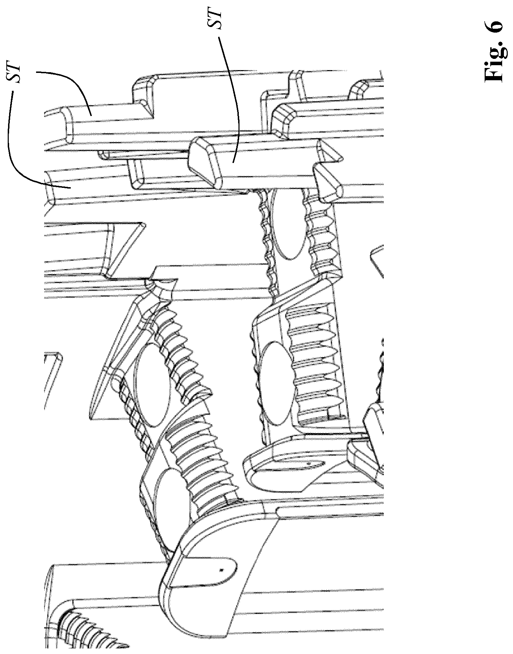

Die Statorzähne P sind abgestuft ausgebildet und weisen Nuten zum Einlegen des Wickeldrahts 2 auf, was insbesondere Figur 6 zeigt.

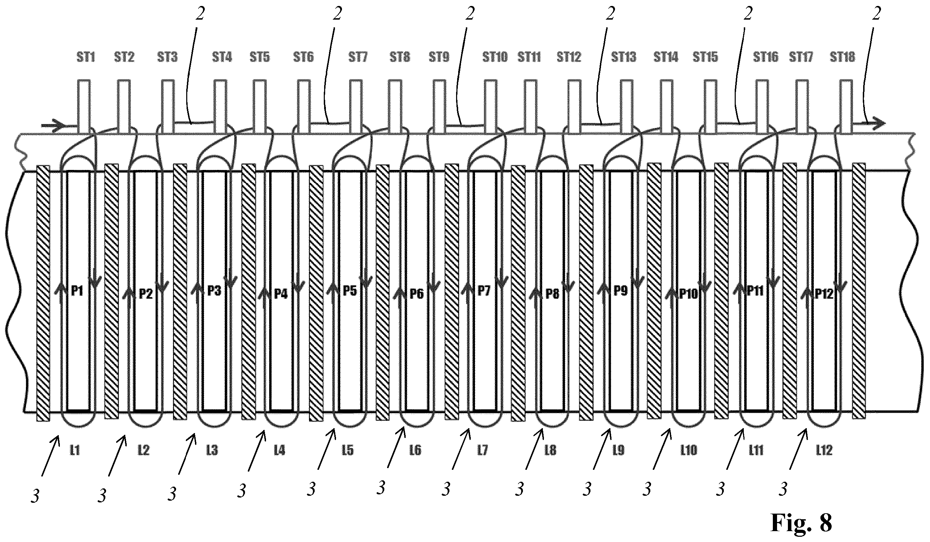

Figur 8 zeigt eine schematische Darstellung zur Illustration des Wickeldrahtverlaufs beim Wickeln von ersten Spulen 3 auf die Statorzähne P1-P12. Jeweils nach dem Aufwickeln einer ersten Spule 3 aus Wickeldraht 2 auf einen der Statorzähne P1-P12 ohne den Wickeldraht 2 zu durchtrennen wird, eine nächste erste Spule 3 aus dem ununterbrochenen Wickeldraht 2 auf einen nächsten Statorzahn P1-P12 aufgewickelt, wobei der Wickeldraht 2 nicht unmittelbar von einem Statorzahn P1-P12 zum nächsten geführt wird. Vielmehr wird der Wickeldraht 2 um jeweils mindestens eine Umlenkstütze ST1-ST18 geführt, die außerhalb des zwischen zwei benachbarten Statorzähnen P1-P12 befindlichen Bauraums 14 angeordnet ist.

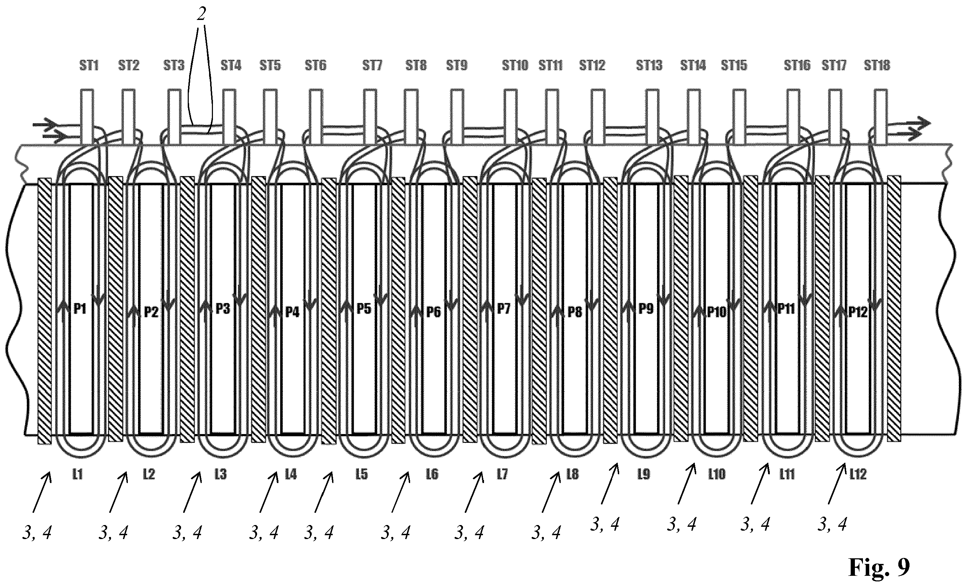

Nach dem Wickeln der ersten Spulen 3 können zweite Spulen 4 auf dieselben Statorzähne P1-P12 gewickelt werden, was in Figur 9 illustriert ist. Bei diesem Beispiel wird der Wickeldraht 2 um dieselben Umlenkstützen ST1-ST18 geführt, wie beim Wickeln der ersten Spulen 3.

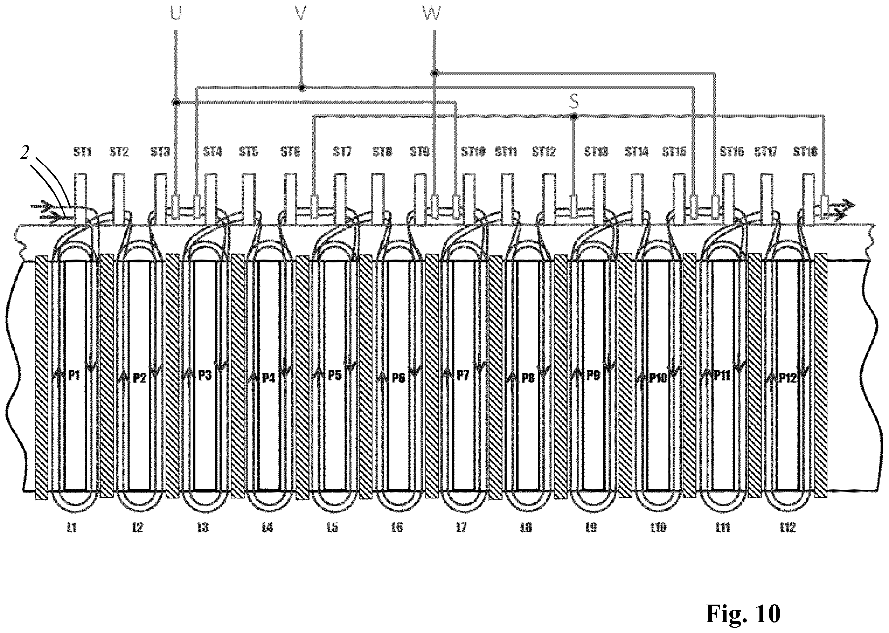

Figur 10 zeigt eine schematische Darstellung zur Illustration der Anschlusskontaktierung. Es ist zu erkennen, dass unterschiedliche Wickeldrahtabschnitte jeweils im Bereich zwischen zwei Umlenkstützen ST1-ST18 kontaktiert und mittels zusätzlicher Leiter, beispielsweise mittels Stromschienen 10, 11, 12, 13, miteinander verbunden werden. Hierbei werden einige Wickeldrahtabschnitte derart verbunden, dass sie einen Sternpunkt S bilden. Jeweils andere Wickeldrahtabschnitte werden zur Bildung von drei Phasen, U, V, W, miteinander verbunden. Anschließend wird der Wickeldraht 2 an mehreren Stellen aufgetrennt, was in der Figur 10 nicht dargestellt ist.

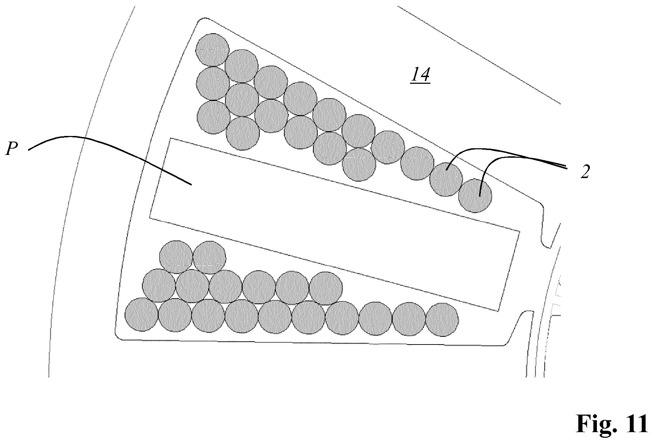

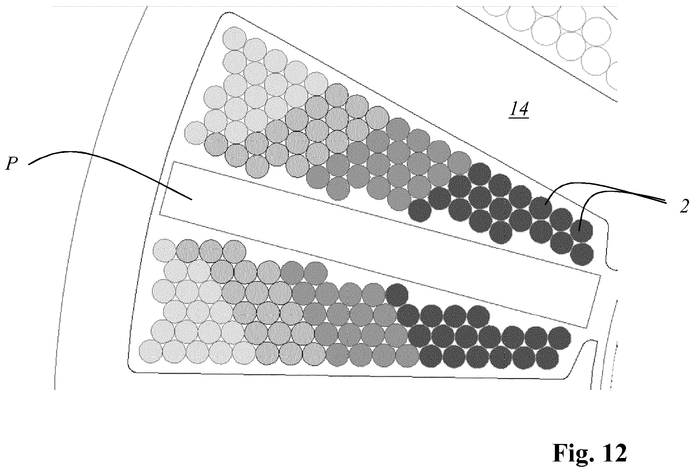

Die auf jeweils einen Statorzahn P gewickelten Spulen 3, 4, 5 werden zueinander parallel geschaltet. Hinsichtlich der Wirkung im Betrieb eines Elektromotors gibt es zwischen einer Spule 3, 4 ,5 mit x Windungen, die mit einem dickeren Wickeldraht 2 gewickelt ist, und beispielsweise vier parallel geschalteten Spulen 3, 4, 5, die jeweils ebenfalls x Windungen aufweisen und die mit einem viermal dünneren Wickeldraht 2 gewickelt sind, keine wesentlichen Unterschiede. Jedoch kann bei Verwendung eines dünneren Wickeldrahts 2 ein um mehr als die Hälfte höherer Füllfaktor erreicht werden, was die Figuren 11 und 12 illustrieren. In der Praxis können so Füllfaktoren von bis zu 50% und mehr erreicht werden. Ein Füllfaktor von 100% würde bedeuten, dass der gesamte Bauraum 14 zwischen den Statorzähnen ST vollständig mit einem elektrischen Leiter, beispielsweise Kupfer, gefüllt wäre.

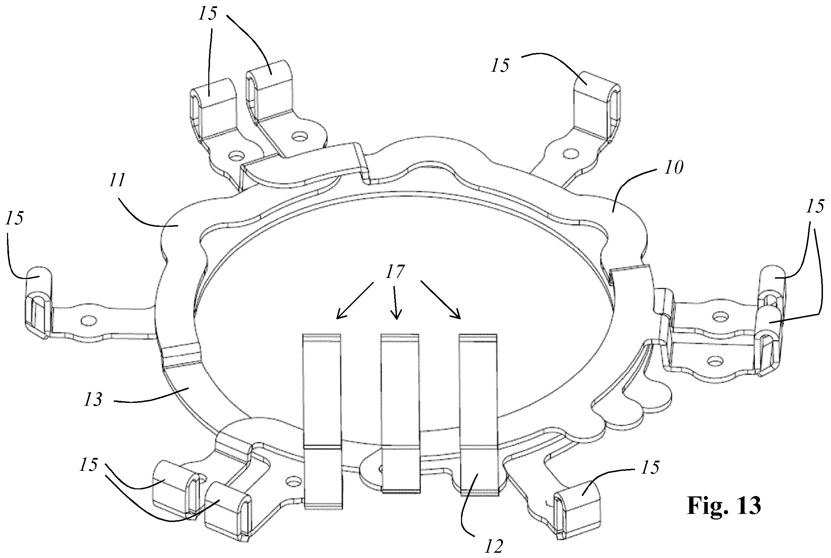

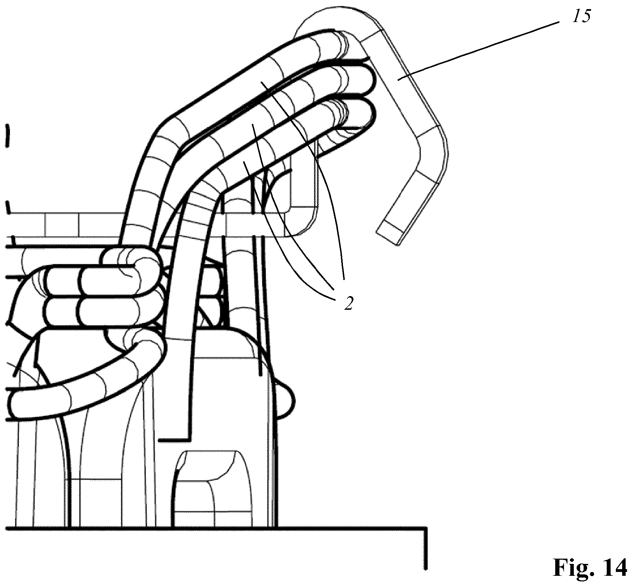

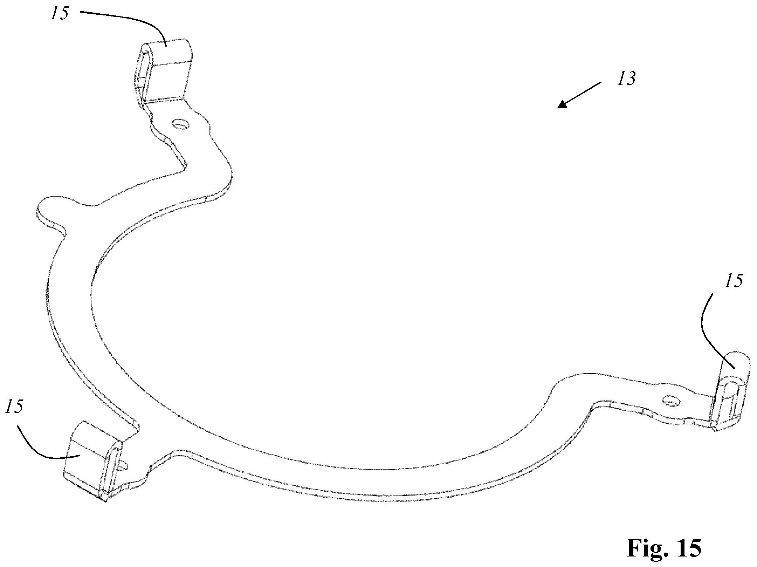

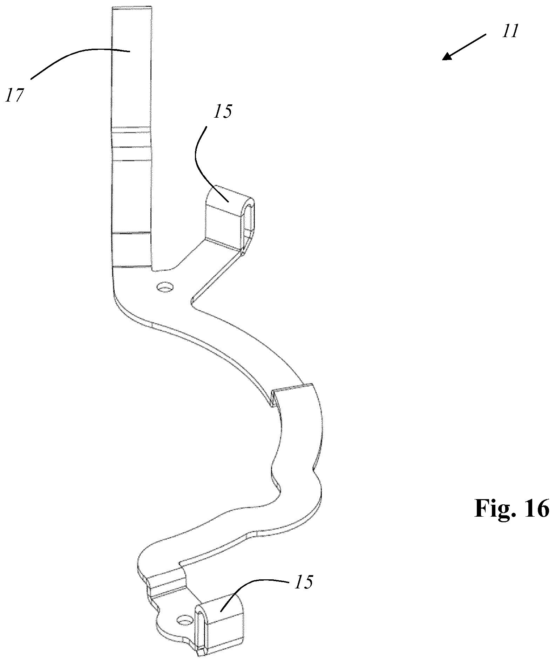

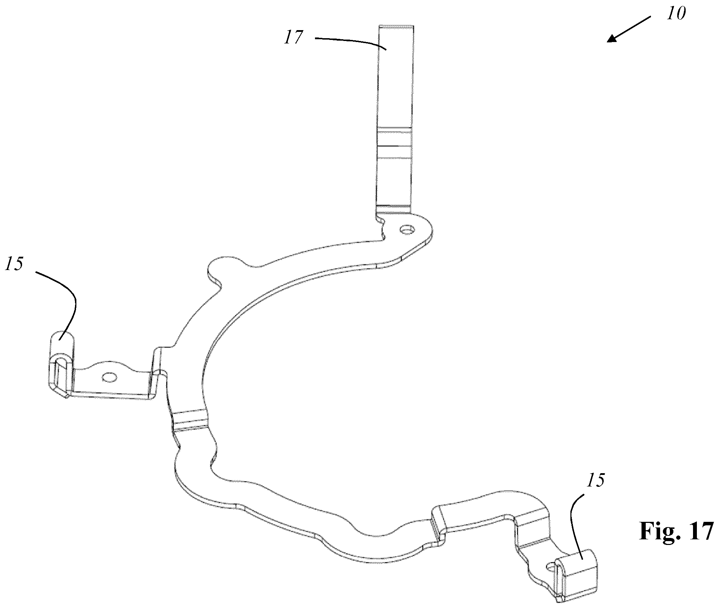

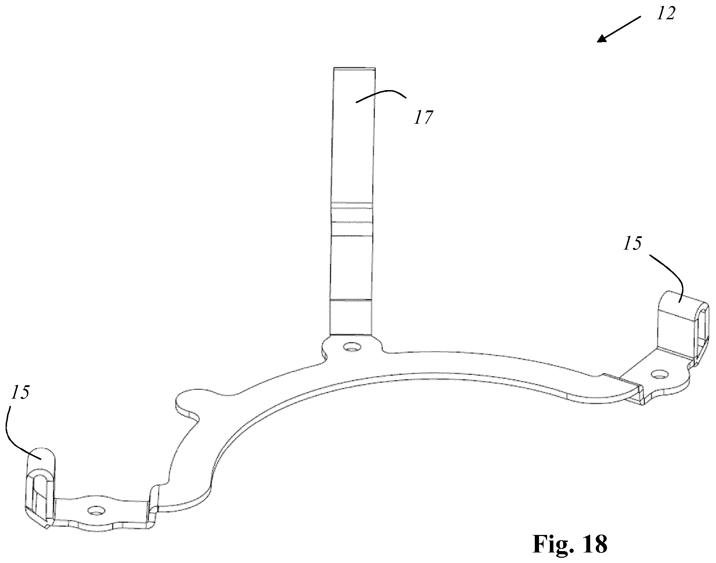

Zur Herstellung eines Stators werden auf das Statorpaket 1 stirnseitig mehrere voneinander isolierte Stromschienen 10, 11, 12, 13, die Hakenfahnen 15 aufweisen, aufgesetzt. Figur 13 zeigt eine solche Anordnung von Stromschienen 10, 11, 12, 13 mit Hakenfahnen15. Die Stromschienen 10, 11, 12, 13 sind derart ausgebildet und werden derart angeordnet, dass die Hakenfahnen 15 jeweils außerhalb des zwischen zwei benachbarten Statorzähnen P befindlichen Bauraums 14 verlaufende Abschnitte des Wickeldrahtes 2, umgreifen, was in Figur 14 gezeigt ist. Die Stromschienen 10, 11, 12, 13 weisen Kontaktabschnitte 17 zum Aufstecken eines elektrischen Steckverbinders auf. Anschließend können die Hakenfahnen 15 mit den umgriffenen Abschnitten des Wickeldrahtes 2 verschweißt werden. Hierbei ist es von besonderem Vorteil, wenn auch im unteren Bereich der Hakenfahnen 15 eine elektrische Verbindung zu dem Wickeldraht 2, beispielsweise durch verschweißen, hergestellt wird. Die Figuren 15 bis 18 zeigen separate Darstellungen der Stromschienen 10, 11, 12, 13.

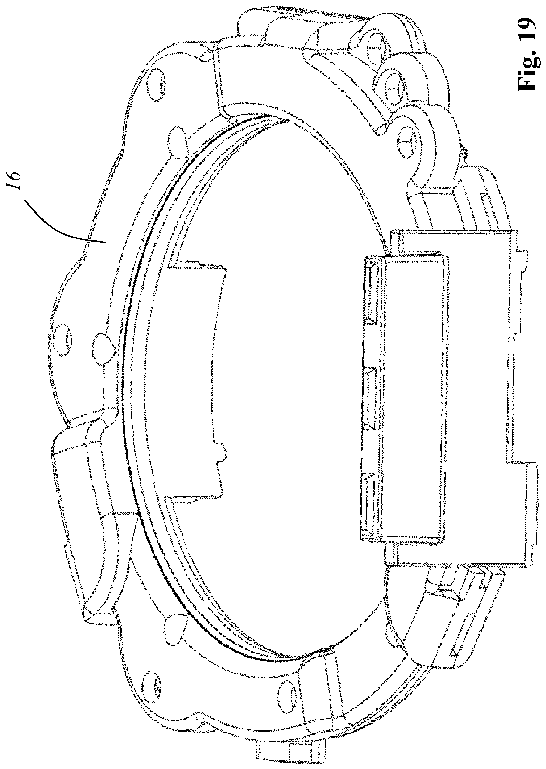

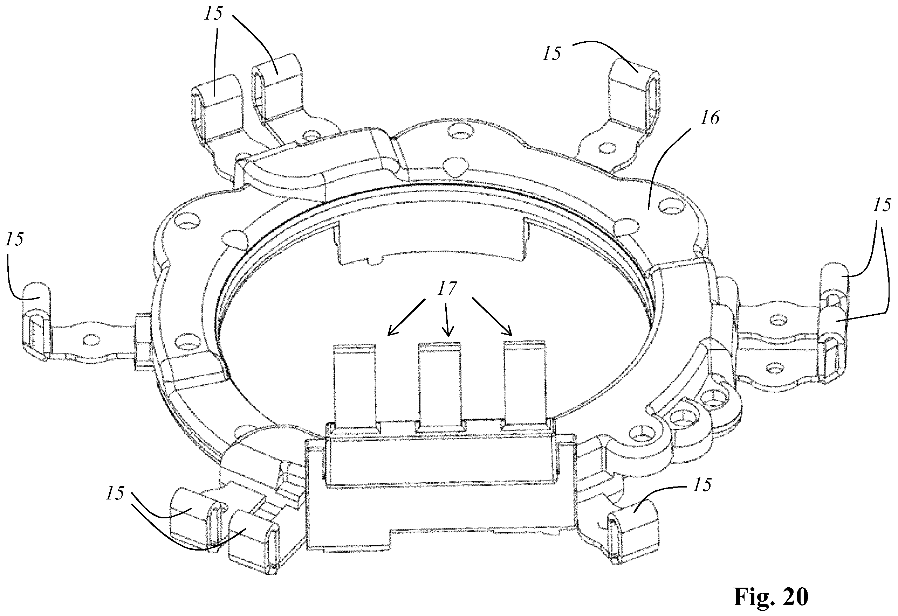

Figur 19 zeigt eine Abdeckvorrichtung 16 zum Abdecken der Stromschienen 10, 11, 12, 13. Figur 20 zeigt die mit der Abdeckvorrichtung 16 abgedeckten Stromschienen 10, 11, 12, 13.

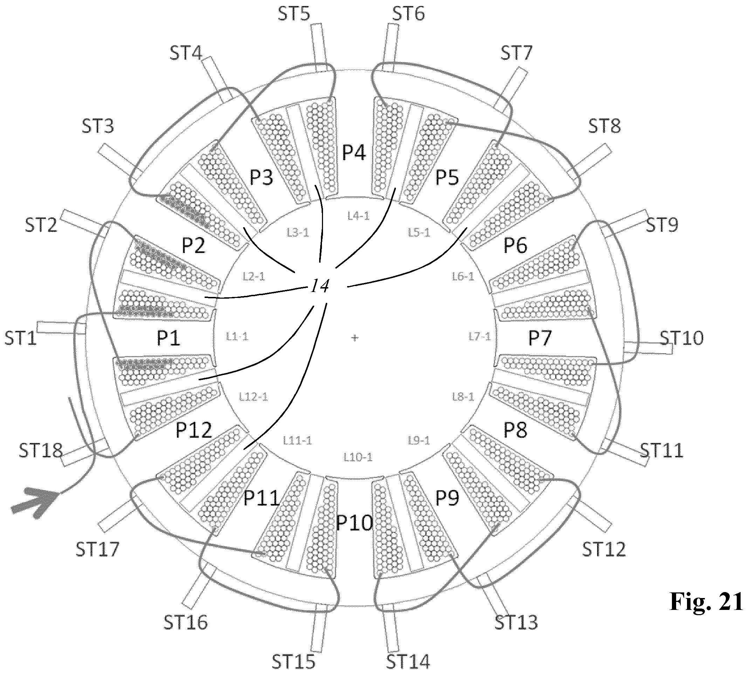

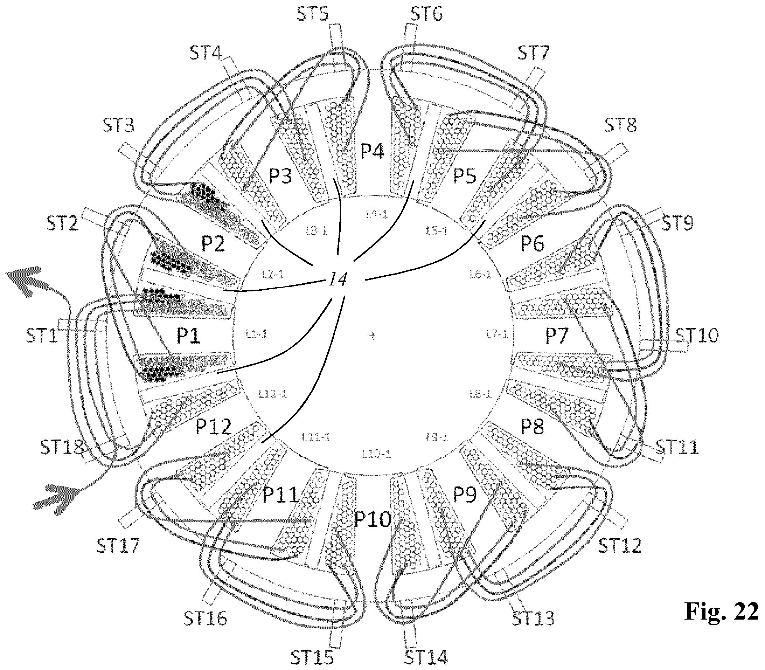

Figur 21 zeigt eine schematische Darstellung zur Illustration des Wickeldrahtverlaufs beim Wickeln von ersten Spulen 3 auf die Statorzähne P1 bis P12. Jeweils nach dem Aufwickeln einer ersten Spule 3 aus Wickeldraht 2 auf einen der Statorzähne P1-P12 ohne den Wickeldraht 2 zu durchtrennen wird eine nächste erste Spule 3 aus dem ununterbrochenen Wickeldraht 2 auf einen nächsten Statorzahn P1-P12 aufgewickelt, wobei der Wickeldraht 2 nicht unmittelbar von einem Statorzahn P1-P12 zum nächsten geführt wird, Vielmehr wird der Wickeldraht 2 um jeweils mindestens eine Umlenkstütze ST1-ST18 geführt, die außerhalb des zwischen zwei benachbarten Statorzähnen P1-P12 befindlichen Bauraums 14 angeordnet ist. Anschließend werden zweite Spulen 4 und dritte Spulen 5 auf die Statorzähne P1 bis P12 aufgewickelt, was in Figur 22 illustriert ist.

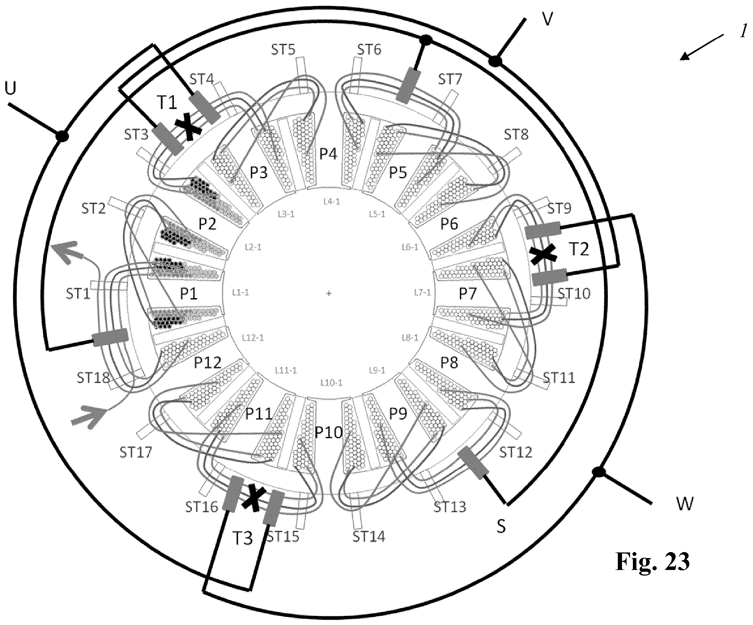

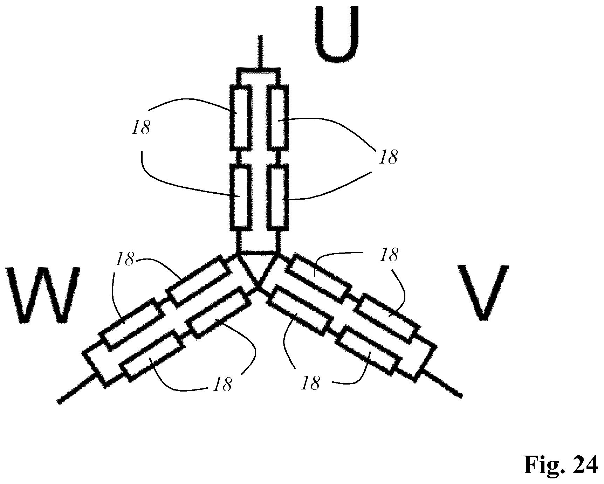

Die auf einen Statorzahn P1-P12 jeweils aufgewickelten Spulen 3, 4, 5 werden zueinander parallel geschaltet, um jeweils ein Spulensystem zu bilden. Dies geschieht beim Kontaktieren mit den Stromschienen 10. 11. 12. 13. Gleichzeitig erfolgt auch ein Verschalten derart, dass drei Phasen U, V, W ausgebildet sind, sowie das Auftrennen des Wickeldrahts 2 an den in der Figur 23 durch jeweils ein Kreuz markierten Stellen. Dies derart, dass die Spulensysteme 18 gemäß der in Figur 24 gezeigten Schaltungsanordnung einer Sternschaltung bilden.

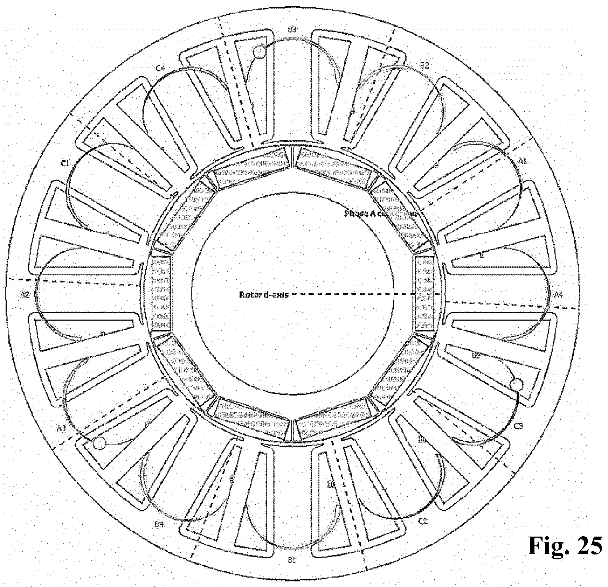

Figur 25 zeigt einen Stator mit einem Rotor. Jeweils zwei benachbarte Spulen werden in Reihe geschaltet und bilden damit ein Polpaar. Jeweils gegenüberliegende Polpaare gehören zu derselben Phase und sind gemäß der in Figur 24 gezeigten Schaltungsanordnung zueinander parallel geschaltet.

### Bezugszeichenliste:

- 1: Statorpaket
- 2: Wickeldraht
- 3: Erste Spulen
- 4: Zweite Spulen
- 5: Dritte Spulen
- 6: erster Teil 6 eines Grundelements
- 7: zweiter Teil 6 eines Grundelements
- 8: erster Haltering
- 9: zweiter Haltering
- 10: Stromschiene
- 11: Stromschiene
- 12: Stromschiene
- 13: Stromschiene
- 14: Bauraum zwischen benachbarten Statorzähnen
- 15 ST: Hakenfahnen
- 16: Abdeckvorrichtung
- 17: Kontaktabschnitte
- 18: Spulensysteme
- ST: Umlenkstützen
- P: Statorzähne
- S: Sternpunkt
- U, V, W: Phasen

## Patentansprüche

1. Verfahren zum Herstellen eines Statorpakets (1), das ein in Umfangsrichtung vollständig geschlossenes Grundelement mit mehreren Statorzähnen (P) aufweist, wobei auf jeden Statorzahn (P) mindestens eine Spule aufgewickelt ist, wobei alle Spulen mit demselben ununterbrochenen Wickeldraht gewickelt werden und wobei jeweils nach dem Aufwickeln einer Spule aus Wickeldraht (2) auf einen der Statorzähne (P), ohne den Wickeldraht (2) zu durchtrennen, eine nächste Spule aus dem ununterbrochenen Wickeldraht (2) auf einen nächsten Statorzahn aufgewickelt wird, wobei der Wickeldraht jeweils nicht unmittelbar von einem Statorzahn zum nächsten geführt wird, sondern jeweils um mindestens eine Umlenkstütze des Grundelements geführt wird, die außerhalb des zwischen zwei benachbarten Statorzähnen (P) befindlichen Bauraums (14) angeordnet ist, **dadurch gekennzeichnet, dass** das Bewickeln der Statorzähne (P) derart erfolgt, dass die Wickeldrahtabschnitte des Wickeldrahtes (2) in den Bauräumen zwischen den Statorzähnen (P) ausschließlich parallel zueinander verlaufen und Kreuzungen von Wickeldrahtabschnitten ausschließlich außerhalb der Bauräume zwischen den Statorzähnen (P) angeordnet sind.

2. Verfahren nach Anspruch 1, **dadurch gekennzeichnet, dass**
a. der Wickeldraht (2) mittels eines Nadelwicklers auf die Statorzähne (P) aufgewickelt wird, oder dass
b. der Wickeldraht (2) mittels eines Nadelwicklers auf die Statorzähne (P) aufgewickelt wird, wobei eine Düse der Wickelnadel jeweils nach dem Wickeln einer Spule vollständig aus dem Bauraum (14) zwischen dem gerade bewickelten Statorzahn und dem nächsten Statorzahn heraus und um die außerhalb des Bauraums (14) angeordnete Umlenkstütze geführt wird, bevor sie zum Wickeln einer nächsten Spule auf einen nächsten Statorzahn wieder in einen Bauraum (14) zwischen zwei Statorzähnen (P) eingeführt wird.

3. Verfahren nach Anspruch 1 oder 2, **dadurch gekennzeichnet, dass** das Bewickeln der Statorzähne (P) derart erfolgt, dass
a. Kreuzungen ausschließlich außerhalb der Räume angeordnet, die sich axial an den zwischen benachbarten Statorpolen befindlichen Bauraum (14) anschließen, und/oder dass
b. Kreuzungen ausschließlich außerhalb der Räume angeordnet, die sich radial an den zwischen benachbarten Statorpolen befindlichen Bauraum (14) anschließen.

4. Verfahren nach einem der Ansprüche 1 bis 3, **dadurch gekennzeichnet, dass**
a. auf wenigsten einen Statorzahn mehrere Spulen aufgewickelt werden oder dass auf alle Statorzähne (P) jeweils mehrere Spulen aufgewickelt werden, oder dass
b. auf wenigsten einen Statorzahn mehrere Spulen aufgewickelt werden oder dass auf alle Statorzähne (P) jeweils mehrere Spulen aufgewickelt werden, wobei zeitlich zwischen dem Aufwickeln von zwei Spulen auf einen Statorzahn wenigstens ein anderer Statorzahn mit wenigstens einer Spule bewickelt wird, oder dass
c. auf wenigsten einen Statorzahn mehrere Spulen aufgewickelt werden oder dass auf alle Statorzähne (P) jeweils mehrere Spulen aufgewickelt werden, wobei zeitlich zwischen dem Aufwickeln von zwei Spulen auf einen Statorzahn wenigstens ein anderer Statorzahn mit wenigstens einer Spule bewickelt wird und die Statorzähne (P) zunächst mit jeweils einer ersten Spule bewickelt werden, wobei der Wickeldraht (2) jeweils von der ersten Spule eines Statorzahns zur ersten Spule des nächsten Statorzahns um jeweils mindestens eine erste Umlenkstütze geführt wird, die außerhalb des zwischen zwei benachbarten Statorzähnen (P) befindlichen Bauraums (14) angeordnet ist, und wobei die Statorzähne (P) anschließend mit jeweils einer zweiten Spule bewickelt werden, wobei der Wickeldraht (2) jeweils von der zweiten Spule eines Statorzahns zur zweiten Spule des nächsten Statorzahns um jeweils mindestens eine zweite, von der ersten Umlenkstütze verschiedene, Umlenkstütze geführt wird, die außerhalb des zwischen zwei benachbarten Statorzähnen (P) befindlichen Bauraums (14) angeordnet ist, oder dass
d. auf wenigsten einen Statorzahn mehrere Spulen aufgewickelt werden oder dass auf alle Statorzähne (P) jeweils mehrere Spulen aufgewickelt werden, wobei zeitlich zwischen dem Aufwickeln von zwei Spulen auf einen Statorzahn wenigstens ein anderer Statorzahn mit wenigstens einer Spule bewickelt wird und die Statorzähne (P) zunächst mit jeweils einer ersten Spule bewickelt werden, wobei der Wickeldraht (2) jeweils von der ersten Spule eines Statorzahns zur ersten Spule des nächsten Statorzahns um jeweils mindestens eine erste Umlenkstütze geführt wird, die außerhalb des zwischen zwei benachbarten Statorzähnen (P) befindlichen Bauraums (14) angeordnet ist, und wobei die Statorzähne (P) anschließend mit jeweils einer zweiten Spule bewickelt werden und der Wickeldraht (2) jeweils von der zweiten Spule eines Statorzahns zur zweiten Spule des nächsten Statorzahns um jeweils mindestens eine zweite, von der ersten Umlenkstütze verschiedene, Umlenkstütze geführt wird, die außerhalb des zwischen zwei benachbarten Statorzähnen (P) befindlichen Bauraums (14) angeordnet ist, und wobei die ersten Umlenkstützen (ST) axial von den zweiten Umlenkstützen (ST) beanstandet sind und/oder dass die ersten Umlenkstützen (ST) und die zweiten Umlenkstützen (ST) in unterschiedlichen, axial voneinander beabstandeten Ebenen angeordnet sind, oder dass
e. auf wenigsten einen Statorzahn mehrere Spulen aufgewickelt werden oder dass auf alle Statorzähne (P) jeweils mehrere Spulen aufgewickelt werden, wobei zeitlich zwischen dem Aufwickeln von zwei Spulen auf einen Statorzahn wenigstens ein anderer Statorzahn mit wenigstens einer Spule bewickelt wird, wobei .die Statorzähne (P) zunächst mit jeweils einer ersten Spule bewickelt werden, wobei der Wickeldraht (2) jeweils von der ersten Spule eines Statorzahns zur ersten Spule des nächsten Statorzahns um jeweils mindestens eine erste Umlenkstütze geführt wird, die außerhalb des zwischen zwei benachbarten Statorzähnen (P) befindlichen Bauraums (14) angeordnet ist, und wobei die Statorzähne (P) anschließend mit jeweils einer zweiten Spule bewickelt werden und der Wickeldraht (2) jeweils von der zweiten Spule eines Statorzahns zur zweiten Spule des nächsten Statorzahns um jeweils mindestens eine zweite, von der ersten Umlenkstütze verschiedene, Umlenkstütze geführt wird, die außerhalb des zwischen zwei benachbarten Statorzähnen (P) befindlichen Bauraums (14) angeordnet ist, wobei die ersten Umlenkstützen (ST) axial von den zweiten Umlenkstützen (ST) beanstandet sind und/oder wobei die ersten Umlenkstützen (ST) und die zweiten Umlenkstützen (ST) in unterschiedlichen, axial voneinander beabstandeten Ebenen angeordnet sind, und wobei die Statorzähne (P) nach dem Aufwickeln der zweiten Spulen (4) mit jeweils einer dritten Spule bewickelt werden, und wobei der Wickeldraht (2) jeweils von der dritten Spule eines Statorzahns zur dritten Spule des nächsten Statorzahns um jeweils eine dritte Umlenkstütze geführt wird, die von der ersten und der zweiten Umlenkstütze verschiedenen ist und die außerhalb des zwischen zwei benachbarten Statorzähnen (P) befindlichen Bauraums (14) angeordnet ist, oder dass
f. auf wenigsten einen Statorzahn mehrere Spulen aufgewickelt werden oder dass auf alle Statorzähne (P) jeweils mehrere Spulen aufgewickelt werden, wobei zeitlich zwischen dem Aufwickeln von zwei Spulen auf einen Statorzahn wenigstens ein anderer Statorzahn mit wenigstens einer Spule bewickelt wird, wobei die Statorzähne (P) zunächst mit jeweils einer ersten Spule bewickelt werden, wobei der Wickeldraht (2) jeweils von der ersten Spule eines Statorzahns zur ersten Spule des nächsten Statorzahns um jeweils mindestens eine erste Umlenkstütze geführt wird, die außerhalb des zwischen zwei benachbarten Statorzähnen(P) befindlichen Bauraums (14) angeordnet ist, und wobei die Statorzähne (P) anschließend mit jeweils einer zweiten Spule bewickelt werden, wobei der Wickeldraht (2) jeweils von der zweiten Spule eines Statorzahns zur zweiten Spule des nächsten Statorzahns um jeweils mindestens eine zweite, von der ersten Umlenkstütze verschiedene, Umlenkstütze geführt wird, die außerhalb des zwischen zwei benachbarten Statorzähnen (P) befindlichen Bauraums (14) angeordnet ist, wobei die ersten Umlenkstützen (ST) axial von den zweiten Umlenkstützen (ST) beanstandet sind und/oder dass die ersten Umlenkstützen (ST) und die zweiten Umlenkstützen (ST) in unterschiedlichen, axial voneinander beabstandeten Ebenen angeordnet sind, und wobei die Statorzähne (P) nach dem Aufwickeln der zweiten Spulen (4) mit jeweils einer dritten Spule bewickelt werden, und wobei der Wickeldraht (2) jeweils von der dritten Spule eines Statorzahns zur dritten Spule des nächsten Statorzahns um jeweils eine dritte Umlenkstütze geführt wird, die von der ersten und der zweiten Umlenkstütze verschiedenen ist und die außerhalb des zwischen zwei benachbarten Statorzähnen (P) befindlichen Bauraums (14) angeordnet ist, und wobei die ersten und/oder zweiten Umlenkstützen (ST) axial von den dritten Umlenkstützen (ST) beanstandet sind und/oder dass die ersten und/oder zweiten Umlenkstützen (ST) und die dritten Umlenkstützen (ST) in unterschiedlichen, axial voneinander beabstandeten Ebenen angeordnet sind.

5. Verfahren zum Herstellen eines Stators, **dadurch gekennzeichnet, dass** zunächst ein Statorpaket (1) mit einem Verfahren nach einem der Ansprüche 1 bis 4 hergestellt wird und dass anschließend der ununterbrochene Wickeldraht (2) an mehreren Stellen aufgetrennt und jeweils mehrere Spulen miteinander verschaltet werden.

6. Verfahren nach Anspruch 5, **dadurch gekennzeichnet, dass**
a. die jeweils auf einen Statorzahn aufgewickelten Spulen zur Bildung eines Spulensystems zueinander parallel geschaltet werden, und/oder dass
b. dass in demselben Bearbeitungsschritt sowohl jeweils mehrere, auf einen Statorzahn aufgewickelte Spulen zur Bildung jeweils eines Spulensystems zueinander parallel geschaltet werden, als auch eine Sternschaltung der Spulensysteme (18) erfolgt, und/oder dass
c. stirnseitig mehrere Stromschienen (10, 11, 12, 13) mit Hakenfahnen (15) derart auf das Statorpaket (1) aufgesetzt werden, dass die Hakenfahnen (15), insbesondere jeweils außerhalb des zwischen zwei benachbarten Statorzähnen (P) befindlichen Bauraums (14) verlaufende, Abschnitte des Wickeldrahtes (2) umgreifen, und/oder dass
d. stirnseitig mehrere Stromschienen (10, 11, 12, 13) mit Hakenfahnen (15) derart auf das Statorpaket (1) aufgesetzt werden, dass die Hakenfahnen (15), insbesondere jeweils außerhalb des zwischen zwei benachbarten Statorzähnen (P) befindlichen Bauraums (14) verlaufende, Abschnitte des Wickeldrahtes (2) umgreifen und die Hakenfahnen (15) mit den Abschnitten des Wickeldrahtes (2) verschweißt werden.

7. Statorpaket (1), das ein in Umfangsrichtung vollständig geschlossenes Grundelement mit mehreren Statorzähnen (P) aufweist, wobei auf jeden Statorzahn (P) mindestens einer Spule aus Wickeldraht (2) aufgewickelt ist, wobei alle Spulen mit demselben ununterbrochenen Wickeldraht gewickelt sind, wobei der Wickeldraht (2) jeweils nicht unmittelbar von einem Statorzahn zum nächsten verläuft, sondern jeweils um mindestens eine Umlenkstütze des Grundelements gelegt ist, die außerhalb des zwischen zwei benachbarten Statorzähnen (P) befindlichen Bauraums (14) angeordnet ist, **dadurch gekennzeichnet, dass** die Wickeldrahtabschnitte des Wickeldrahtes (2) in den Räumen zwischen den Statorzähnen (P) ausschließlich parallel zueinander verlaufen und dass Kreuzungen von Wickeldrahtabschnitten ausschließlich außerhalb der Räume zwischen den Statorzähnen (P) angeordnet sind.

8. Statorpaket (1) nach Anspruch 7, **dadurch gekennzeichnet, dass**
a. Kreuzungen ausschließlich außerhalb der Räume angeordnet, die sich axial an den zwischen benachbarten Statorpolen befindlichen Bauraum (14) anschließen, und/oder dass
b. Kreuzungen ausschließlich außerhalb der Räume angeordnet, die sich radial an den zwischen benachbarten Statorpolen befindlichen Bauraum (14) anschließen.

9. Statorpaket (1) nach Anspruch 8, **dadurch gekennzeichnet, dass**
a. auf wenigsten einen Statorzahn mehrere Spulen aufgewickelt sind oder dass auf alle Statorzähne (P) mehrere Spulen aufgewickelt sind, oder dass
b. auf jeden Statorzahn jeweils eine erste Spule und eine zweite Spule aufgewickelt ist und dass der Wickeldraht (2) auf seinem Weg von einer ersten Spule eines Statorzahn zur ersten Spule des benachbarten Statorzahns um mindestens eine erste Umlenkstütze gelegt ist, die außerhalb des zwischen den benachbarten Statorzähnen (P) befindlichen Bauraums (14) angeordnet ist, und dass der Wickeldraht (2) auf seinem Weg von einer zweiten Spule eines Statorzahn zur zweiten Spule des benachbarten Statorzahns um mindestens eine zweite Umlenkstütze gelegt ist, die von der ersten Umlenkstütze verscheiden ist und die außerhalb des zwischen den benachbarten Statorzähnen (P) befindlichen Bauraums (14) angeordnet ist, oder dass
c. auf jeden Statorzahn jeweils eine erste Spule und eine zweite Spule aufgewickelt ist und dass der Wickeldraht (2) auf seinem Weg von einer ersten Spule eines Statorzahn zur ersten Spule des benachbarten Statorzahns um mindestens eine erste Umlenkstütze gelegt ist, die außerhalb des zwischen den benachbarten Statorzähnen (P) befindlichen Bauraums (14) angeordnet ist, und dass der Wickeldraht (2) auf seinem Weg von einer zweiten Spule eines Statorzahn zur zweiten Spule des benachbarten Statorzahns um mindestens eine zweite Umlenkstütze gelegt ist, die von der ersten Umlenkstütze verscheiden ist und die außerhalb des zwischen den benachbarten Statorzähnen (P) befindlichen Bauraums (14) angeordnet ist, wobei die ersten Umlenkstützen (ST) axial von den zweiten Umlenkstützen (ST) beanstandet sind und/oder dass die ersten Umlenkstützen (ST) und die zweiten Umlenkstützen (ST) in unterschiedlichen, axial voneinander beabstandeten Ebenen angeordnet sind, oder dass
d. auf jeden Statorzahn jeweils eine erste Spule und eine zweite Spule aufgewickelt ist und dass der Wickeldraht (2) auf seinem Weg von einer ersten Spule eines Statorzahn zur ersten Spule des benachbarten Statorzahns um mindestens eine erste Umlenkstütze gelegt ist, die außerhalb des zwischen den benachbarten Statorzähnen (P) befindlichen Bauraums (14) angeordnet ist, und dass der Wickeldraht (2) auf seinem Weg von einer zweiten Spule eines Statorzahn zur zweiten Spule des benachbarten Statorzahns um mindestens eine zweite Umlenkstütze gelegt ist, die von der ersten Umlenkstütze verscheiden ist und die außerhalb des zwischen den benachbarten Statorzähnen (P) befindlichen Bauraums (14) angeordnet ist, wobei die ersten Umlenkstützen (ST) axial von den zweiten Umlenkstützen (ST) beanstandet sind und/oder dass die ersten Umlenkstützen (ST) und die zweiten Umlenkstützen (ST) in unterschiedlichen, axial voneinander beabstandeten Ebenen angeordnet sind und auf jeden Statorzahn jeweils eine dritte Spule aufgewickelt ist und der Wickeldraht (2), auf seinem Weg von einer dritten Spule eines Statorzahns zur dritten Spule des benachbarten Statorzahns um eine dritte Umlenkstütze gelegt ist, die außerhalb des zwischen den benachbarten Statorzähnen (P) befindlichen Bauraums (14) angeordnet ist, oder dass
e. auf jeden Statorzahn jeweils eine erste Spule und eine zweite Spule aufgewickelt ist und dass der Wickeldraht (2) auf seinem Weg von einer ersten Spule eines Statorzahn zur ersten Spule des benachbarten Statorzahns um mindestens eine erste Umlenkstütze gelegt ist, die außerhalb des zwischen den benachbarten Statorzähnen (P) befindlichen Bauraums (14) angeordnet ist, und dass der Wickeldraht (2) auf seinem Weg von einer zweiten Spule eines Statorzahn zur zweiten Spule des benachbarten Statorzahns um mindestens eine zweite Umlenkstütze gelegt ist, die von der ersten Umlenkstütze verscheiden ist und die außerhalb des zwischen den benachbarten Statorzähnen (P) befindlichen Bauraums (14) angeordnet ist, wobei die ersten Umlenkstützen (ST) axial von den zweiten Umlenkstützen (ST) beanstandet sind und/oder dass die ersten Umlenkstützen (ST) und die zweiten Umlenkstützen (ST) in unterschiedlichen, axial voneinander beabstandeten Ebenen angeordnet sind und auf jeden Statorzahn jeweils eine dritte Spule aufgewickelt ist und der Wickeldraht (2), auf seinem Weg von einer dritten Spule eines Statorzahns zur dritten Spule des benachbarten Statorzahns um eine dritte Umlenkstütze gelegt ist, die außerhalb des zwischen den benachbarten Statorzähnen (P) befindlichen Bauraums (14) angeordnet ist, und die ersten und/oder zweiten Umlenkstützen axial von den dritten Umlenkstützen (ST) beanstandet sind und/oder dass die ersten und/oder zweiten Umlenkstützen (ST) und die dritten Umlenkstützen (ST) in unterschiedlichen, axial voneinander beabstandeten Ebenen angeordnet sind.

10. Statorpaket (1) nach Anspruch 8 oder 9, **dadurch gekennzeichnet, dass**
a. die Statorzähne (P) abgestuft ausgebildet oder dass
b. die Statorzähne (P) in radial Richtung abgestuft ausgebildet sind oder dass
c. die Statorzähne (P) Abschnitte unterschiedlichem Umfang aufweisen oder dass
d. die Statorzähne (P) Abschnitte unterschiedlichem Umfang aufweisen, wobei die radial weiter innen liegenden Abschnitte einen größeren Durchmesser aufweisen, als die radial weiter außen liegenden Abschnitte.

11. Stator, hergestellt unter Verwendung eines Statorpaketes (1) nach einem der Ansprüche 8 bis 10.

12. Stator nach Anspruch 11, **dadurch gekennzeichnet, dass**
a. der Stator stirnseitig mehrere, insbesondere genau vier, Stromschienen (10, 11, 12, 13) mit Hakenfahnen (15) aufweist, wobei die Hakenfahnen (15), insbesondere jeweils außerhalb des zwischen zwei benachbarten Statorzähnen (P) befindlichen Bauraums (14) verlaufende, Abschnitte des Wickeldrahtes (2) umgreifen und mit diesen elektrisch leitend verbunden, insbesondere verschweißt, sind, oder dass
b. der Stator stirnseitig mehrere, insbesondere genau vier, Stromschienen (10, 11, 12, 13) mit Hakenfahnen (15) aufweist, wobei die Hakenfahnen (15), insbesondere jeweils außerhalb des zwischen zwei benachbarten Statorzähnen (P) befindlichen Bauraums (14) verlaufende, Abschnitte des Wickeldrahtes (2) umgreifen und mit diesen elektrisch leitend verbunden, insbesondere verschweißt, sind, wobei die Stromschienen 10, 11, 12, 13 in axialer Richtung wenigstens teilweise übereinander angeordnet sind.

13. Stator nach Anspruch 11 oder 12, **dadurch gekennzeichnet, dass**
a. die jeweils auf einen Statorzahn aufgewickelten Spulen zueinander parallel geschaltet sind, und/oder dass
b. mehrere Spulen in einer Sternschaltung miteinander verschaltet sind oder dass mehrere Gesamtspulen in einer Sternschaltung miteinander verschaltet sind.

14. Elektromotor, der einen Stator nach einem der Ansprüche 11 bis 13 beinhaltet.

15. Elektromotor nach Anspruch 14, **dadurch gekennzeichnet, dass**
a. der Elektromotor ein dreiphasiger Elektromotor mit Sternschaltung ist, und/oder dass
b. der Stator 12 Statorzähne (P) aufweist und/oder dass der Rotor 10 oder 14 Magnete aufweist.

## Claims

1. Method for producing a stator assembly (1) having a main element which is completely closed in a circumferential direction and has multiple stator teeth (P), wherein at least one coil is wound onto each stator tooth (P),
wherein all the coils are wound using the same uninterrupted winding wire, and wherein, in each case after the winding of a coil composed of winding wire (2) onto one of the stator teeth (P), without severing the winding wire (2), the next coil composed of the uninterrupted winding wire (2) is wound onto the next stator tooth, wherein the winding wire is in each case not led directly from one stator tooth to the next, but is in each case led around at least one deflection support of the main element, said deflection support being arranged outside the structural space (14) situated between two adjacent stator teeth (P), **characterized in that** the winding of the stator teeth (P) is realized in such a way that the winding-wire portions of the winding wire (2) in the structural spaces between the stator teeth (P) run exclusively parallel to one another and crossings of winding-wire portions are arranged exclusively outside the structural spaces between the stator teeth (P).

2. Method according to Claim 1, **characterized in that**
a. the winding wire (2) is wound onto the stator teeth (P) by means of a needle winder, or **in that**
b. the winding wire (2) is wound onto the stator teeth (P) by means of a needle winder, wherein, in each case after the winding of a coil, a nozzle of the winding needle is led all the way out of the structural space (14) between the stator tooth that has just been wound and the next stator tooth and around the deflection support arranged outside the structural space (14) before being introduced into a structural space (14) between two stator teeth (P) again for the purpose of winding the next coil onto the next stator tooth.

3. Method according to Claim 1 or 2, **characterized in that** the winding of the stator teeth (P) is realized in such a way that
a. crossings are arranged exclusively outside the spaces which axially adjoin the structural space (14) situated between adjacent stator poles, and/or **in that**
b. crossings are arranged exclusively outside the spaces which radially adjoin the structural space (14) situated between adjacent stator poles.

4. Method according to one of Claims 1 to 3, **characterized in that**
a. multiple coils are wound onto at least one stator tooth, or **in that** in each case multiple coils are wound onto all the stator teeth (P), or **in that**
b. multiple coils are wound onto at least one stator tooth, or **in that** in each case multiple coils are wound onto all the stator teeth (P), wherein, chronologically between the winding of two coils onto a stator tooth, at least one other stator tooth has at least one coil wound onto it, or **in that**
c. multiple coils are wound onto at least one stator tooth, or **in that** in each case multiple coils are wound onto all the stator teeth (P), wherein, chronologically between the winding of two coils onto a stator tooth, at least one other stator tooth has at least one coil wound onto it, and the stator teeth (P) firstly have in each case one first coil wound onto them, wherein the winding wire (2) is in each case led from the first coil of a stator tooth to the first coil of the next stator tooth around in each case at least one first deflection support, which is arranged outside the structural space (14) situated between two adjacent stator teeth (P), and wherein the stator teeth (P) subsequently have in each case one second coil wound onto them, wherein the winding wire (2) is in each case led from the second coil of a stator tooth to the second coil of the next stator tooth around in each case at least one second deflection support, which is different from the first deflection support and is arranged outside the structural space (14) situated between two adjacent stator teeth (P), or **in that**
d. multiple coils are wound onto at least one stator tooth, or **in that** in each case multiple coils are wound onto all the stator teeth (P), wherein, chronologically between the winding of two coils onto a stator tooth, at least one other stator tooth has at least one coil wound onto it, and the stator teeth (P) firstly have in each case one first coil wound onto them, wherein the winding wire (2) is in each case led from the first coil of a stator tooth to the first coil of the next stator tooth around in each case at least one first deflection support, which is arranged outside the structural space (14) situated between two adjacent stator teeth (P), and wherein the stator teeth (P) subsequently have in each case one second coil wound onto them, and the winding wire (2) is in each case led from the second coil of a stator tooth to the second coil of the next stator tooth around in each case at least one second deflection support, which is different from the first deflection support and is arranged outside the structural space (14) situated between two adjacent stator teeth (P), and wherein the first deflection supports (ST) are spaced apart axially from the second deflection supports (ST), and/or **in that** the first deflection supports (ST) and the second deflection supports (ST) are arranged in different planes that are spaced apart axially from one another, or **in that**
e. multiple coils are wound onto at least one stator tooth, or **in that** in each case multiple coils are wound onto all the stator teeth (P), wherein, chronologically between the winding of two coils onto a stator tooth, at least one other stator tooth has at least one coil wound onto it, wherein the stator teeth (P) firstly have in each case one first coil wound onto them, wherein the winding wire (2) is in each case led from the first coil of a stator tooth to the first coil of the next stator tooth around in each case at least one first deflection support, which is arranged outside the structural space (14) situated between two adjacent stator teeth (P), and wherein the stator teeth (P) subsequently have in each case one second coil wound onto them, and the winding wire (2) is in each case led from the second coil of a stator tooth to the second coil of the next stator tooth around in each case at least one second deflection support, which is different from the first deflection support and is arranged outside the structural space (14) situated between two adjacent stator teeth (P), wherein the first deflection supports (ST) are spaced apart axially from the second deflection supports (ST), and/or wherein the first deflection supports (ST) and the second deflection supports (ST) are arranged in different planes that are spaced apart axially from one another, and wherein, after the winding of the second coils (4), the stator teeth (P) have in each case one third coil wound onto them, and wherein the winding wire (2) is in each case led from the third coil of a stator tooth to the third coil of the next stator tooth around in each case one third deflection support, which is different from the first and second deflection supports and is arranged outside the structural space (14) situated between two adjacent stator teeth (P), or **in that**
f. multiple coils are wound onto at least one stator tooth, or **in that** in each case multiple coils are wound onto all the stator teeth (P), wherein, chronologically between the winding of two coils onto a stator tooth, at least one other stator tooth has at least one coil wound onto it, wherein the stator teeth (P) firstly have in each case one first coil wound onto them, wherein the winding wire (2) is in each case led from the first coil of a stator tooth to the first coil of the next stator tooth around in each case at least one first deflection support, which is arranged outside the structural space (14) situated between two adjacent stator teeth (P), and wherein the stator teeth (P) subsequently have in each case one second coil wound onto them, wherein the winding wire (2) is in each case led from the second coil of a stator tooth to the second coil of the next stator tooth around in each case at least one second deflection support, which is different from the first deflection support and is arranged outside the structural space (14) situated between two adjacent stator teeth (P), wherein the first deflection supports (ST) are spaced apart axially from the second deflection supports (ST), and/or in that the first deflection supports (ST) and the second deflection supports (ST) are arranged in different planes that are spaced apart axially from one another, and wherein, after the winding of the second coils (4), the stator teeth (P) have in each case one third coil wound onto them, and wherein the winding wire (2) is in each case led from the third coil of a stator tooth to the third coil of the next stator tooth around in each case one third deflection support, which is different from the first and second deflection supports and is arranged outside the structural space (14) situated between two adjacent stator teeth (P), and wherein the first and/or second deflection supports (ST) are spaced apart axially from the third deflection supports (ST), and/or **in that** the first and/or second deflection supports (ST) and the third deflection supports (ST) are arranged in different planes that are spaced apart axially from one another.

5. Method for producing a stator, **characterized in that** firstly a stator assembly (1) is produced using a method according to one of Claims 1 to 4, and **in that** subsequently the uninterrupted winding wire (2) is cut at multiple locations and in each case multiple coils are interconnected with one another.

6. Method according to Claim 5, **characterized in that**
a. the coils wound in each case onto a stator tooth are, for the purpose of forming a coil system, connected in parallel with one another, and/or **in that**,
b. **in that** in the same processing step, both in each case multiple coils wound onto a stator tooth are, for the purpose of forming in each case a coil system, connected in parallel with one another and a star connection of the coil systems (18) is realized, and/or in that,
c. at an end face, multiple busbars (10, 11, 12, 13) with hook-type lugs (15) are mounted onto the stator assembly (1) in such a way that the hook-type lugs (15) engage, in particular in each case in a manner running outside the structural space (14) situated between two adjacent stator teeth (P), around portions of the winding wire (2), and/or **in that**,
d. at an end face, multiple busbars (10, 11, 12, 13) with hook-type lugs (15) are mounted onto the stator assembly (1) in such a way that the hook-type lugs (15) engage, in particular in each case in a manner running outside the structural space (14) situated between two adjacent stator teeth (P), around portions of the winding wire (2), and the hook-type lugs (15) are welded to the portions of the winding wire (2).

7. Stator assembly (1) having a main element which is completely closed in a circumferential direction and has multiple stator teeth (P), wherein at least one coil composed of winding wire (2) is wound onto each stator tooth (P), wherein all the coils are wound using the same uninterrupted winding wire, wherein the winding wire (2) in each case does not run directly from one stator tooth to the next, but is in each case placed around at least one deflection support of the main element, said deflection support being arranged outside the structural space (14) situated between two adjacent stator teeth (P), **characterized in that** the winding-wire portions of the winding wire (2) in the spaces between the stator teeth (P) run exclusively parallel to one another, and **in that** crossings of winding-wire portions are arranged exclusively outside the spaces between the stator teeth (P).

8. Stator assembly (1) according to Claim 7, **characterized in that**
a. crossings are arranged exclusively outside the spaces which axially adjoin the structural space (14) situated between adjacent stator poles, and/or **in that**
b. crossings are arranged exclusively outside the spaces which radially adjoin the structural space (14) situated between adjacent stator poles.

9. Stator assembly (1) according to Claim 8, **characterized in that**
a. multiple coils are wound onto at least one stator tooth, or **in that** multiple coils are wound onto all the stator teeth (P), or **in that**
b. in each case one first coil and one second coil are wound onto each stator tooth, and **in that**, on its way from a first coil of a stator tooth to the first coil of the adjacent stator tooth, the winding wire (2) is placed around at least one first deflection support, which is arranged outside the structural space (14) situated between the adjacent stator teeth (P), and **in that**, on its way from a second coil of a stator tooth to the second coil of the adjacent stator tooth, the winding wire (2) is placed around at least one second deflection support, which is different from the first deflection support and is arranged outside the structural space (14) situated between the adjacent stator teeth (P), or **in that**
c. in each case one first coil and one second coil are wound onto each stator tooth, and **in that**, on its way from a first coil of a stator tooth to the first coil of the adjacent stator tooth, the winding wire (2) is placed around at least one first deflection support, which is arranged outside the structural space (14) situated between the adjacent stator teeth (P), and **in that**, on its way from a second coil of a stator tooth to the second coil of the adjacent stator tooth, the winding wire (2) is placed around at least one second deflection support, which is different from the first deflection support and is arranged outside the structural space (14) situated between the adjacent stator teeth (P), wherein the first deflection supports (ST) are spaced apart axially from the second deflection supports (ST), and/or **in that** the first deflection supports (ST) and the second deflection supports (ST) are arranged in different planes that are spaced apart axially from one another, or **in that**
d. in each case one first coil and one second coil are wound onto each stator tooth, and **in that**, on its way from a first coil of a stator tooth to the first coil of the adjacent stator tooth, the winding wire (2) is placed around at least one first deflection support, which is arranged outside the structural space (14) situated between the adjacent stator teeth (P), and **in that**, on its way from a second coil of a stator tooth to the second coil of the adjacent stator tooth, the winding wire (2) is placed around at least one second deflection support, which is different from the first deflection support and is arranged outside the structural space (14) situated between the adjacent stator teeth (P), wherein the first deflection supports (ST) are spaced apart axially from the second deflection supports (ST), and/or **in that** the first deflection supports (ST) and the second deflection supports (ST) are arranged in different planes that are spaced apart axially from one another, and in each case one third coil is wound onto each stator tooth and, on its way from a third coil of a stator tooth to the third coil of the adjacent stator tooth, the winding wire (2) is placed around a third deflection support, which is arranged outside the structural space (14) situated between the adjacent stator teeth (P), or **in that**
e. in each case one first coil and one second coil are wound onto each stator tooth, and **in that**, on its way from a first coil of a stator tooth to the first coil of the adjacent stator tooth, the winding wire (2) is placed around at least one first deflection support, which is arranged outside the structural space (14) situated between the adjacent stator teeth (P), and **in that**, on its way from a second coil of a stator tooth to the second coil of the adjacent stator tooth, the winding wire (2) is placed around at least one second deflection support, which is different from the first deflection support and is arranged outside the structural space (14) situated between the adjacent stator teeth (P), wherein the first deflection supports (ST) are spaced apart axially from the second deflection supports (ST), and/or **in that** the first deflection supports (ST) and the second deflection supports (ST) are arranged in different planes that are spaced apart axially from one another, and in each case one third coil is wound onto each stator tooth and, on its way from a third coil of a stator tooth to the third coil of the adjacent stator tooth, the winding wire (2) is placed around a third deflection support, which is arranged outside the structural space (14) situated between the adjacent stator teeth (P), and the first and/or second deflection supports are spaced apart axially from the third deflection supports (ST), and/or in that the first and/or second deflection supports (ST) and the third deflection supports (ST) are arranged in different planes that are spaced apart axially from one another.

10. Stator assembly (1) according to Claim 8 or 9, **characterized in that**
a. the stator teeth (P) are of stepped form, or **in that**
b. the stator teeth (P) are formed so as to be stepped in a radial direction, or **in that**
c. the stator teeth (P) have portions of different extents, or **in that**
d. the stator teeth (P) have portions of different extents, wherein the portions situated radially further inwards have a greater diameter than the portions situated radially further outwards.

11. Stator produced using a stator assembly (1) according to one of Claims 8 to 10.

12. Stator according to Claim 11, **characterized in that**,
a. at an end face, the stator has multiple, in particular exactly four, busbars (10, 11, 12, 13) with hook-type lugs (15), wherein the hook-type lugs (15) engage, in particular in each case in a manner running outside the structural space (14) situated between two adjacent stator teeth (P), around portions of the winding wire (2) and are connected, in particular welded, thereto in an electrically conductive manner, or **in that**,
b. at an end face, the stator has multiple, in particular exactly four, busbars (10, 11, 12, 13) with hook-type lugs (15), wherein the hook-type lugs (15) engage, in particular in each case in a manner running outside the structural space (14) situated between two adjacent stator teeth (P), around portions of the winding wire (2) and are connected, in particular welded, thereto in an electrically conductive manner, wherein the busbars 10, 11, 12, 13 are arranged so as to be at least partially one above the other in an axial direction.

13. Stator according to Claim 11 or 12, **characterized in that**
a. the coils in each case wound onto a stator tooth are connected in parallel with one another, and/or **in that**
b. multiple coils are interconnected with one another in a star connection, or **in that** multiple overall coils are interconnected with one another in a star connection.

14. Electric motor containing a stator according to one of Claims 11 to 13.

15. Electric motor according to Claim 14, **characterized in that**
a. the electric motor is a three-phase electric motor with a star connection, and/or **in that**
b. the stator has 12 stator teeth (P), and/or **in that** the rotor has 10 or 14 magnets.

## Revendications

1. Procédé de fabrication d'un paquet statorique (1) qui présente un élément de base complètement fermé circonférentiellement et comprenant plusieurs dents (P) de stator, au moins une bobine étant enroulée sur chaque dent (P) de stator,
toutes les bobines étant enroulées avec le même fil de bobinage ininterrompu et, après l'enroulement d'une bobine de fil de bobinage (2) sur l'une des dents (P) de stator, sans couper le fil de bobinage (2), une bobine suivante étant enroulée à partir du fil de bobinage ininterrompu (2) sur une dent de stator suivante, le fil de bobinage n'étant pas guidé directement d'une dent de stator à la suivante, mais étant guidé à chaque fois autour d'au moins un support de déviation de l'élément de base, qui est agencé à l'extérieur de l'espace de montage (14) situé entre deux dents (P) de stator adjacentes, **caractérisé en ce que** l'enroulement autour des dents (P) (P) est réalisé de telle sorte que les sections de fil de bobinage du fil de bobinage (2) s'étendent exclusivement parallèlement les unes aux autres dans les espaces de montage entre les dents (P) de stator, et des croisements de sections de fil de bobinage sont agencés exclusivement à l'extérieur des espaces de montage entre les dents (P) de stator.

2. Procédé selon la revendication 1, **caractérisé en ce que**
a. le fil de bobinage (2) est enroulé sur les dents (P) de stator (au moyen d'un enrouleur à aiguilles, ou **en ce que**
b. le fil de bobinage (2) est enroulé sur les dents (P) de stator au moyen d'un enrouleur à aiguilles, une buse de l'aiguille d'enroulement étant retirée complètement de l'espace de montage (14) entre la dent de stator qui vient d'être bobinée et la dent suivante du stator après chaque bobinage d'une bobine, et étant guidée autour du support de déviation agencé à l'extérieur de l'espace de montage (14), avant d'être réintroduite dans un espace de montage (14) entre deux dents (P) de stator pour enrouler une bobine suivante sur une dent de stator suivante.

3. Procédé selon la revendication 1 ou la revendication 2, **caractérisé en ce que** l'enroulement des dents (P) de stator (s'effectue de telle sorte que
a. des croisements sont agencés exclusivement à l'extérieur des espaces qui se raccordent axialement à l'espace de montage (14) situé entre les pôles adjacents du stator, et/ou **en ce que**
b. des croisements sont agencés exclusivement à l'extérieur des espaces qui se raccordent radialement à l'espace de montage (14) situé entre les pôles adjacents du stator.

4. Procédé selon l'une des revendications 1 à 3, **caractérisé en ce que**
a. plusieurs bobines sont enroulées sur au moins une dent de stator ou **en ce que** plusieurs bobines sont enroulées sur toutes les dents (P) de stator, ou **en ce que**
b. plusieurs bobines sont enroulées sur au moins une dent de stator ou **en ce que** plusieurs bobines sont enroulées chaque fois sur toutes les dents (P) de stator, de sorte que chronologiquement, entre l'enroulement de deux bobines sur une dent de stator, au moins une autre dent de stator reçoit au moins une bobine enroulée sur elle, ou **en ce que**
c. plusieurs bobines sont enroulées sur au moins une dent de stator ou **en ce que** plusieurs bobines sont enroulées chacune sur toutes les dents (P) de stator, une autre dent de stator recevant au moins une bobine enroulée sur elle chronologiquement entre l'enroulement de deux bobines sur une dent de stator, et les dents (P) de stator recevant d'abord chacune une première bobine enroulée sur elle, le fil de bobinage (2) étant guidé à chaque fois de la première bobine d'une dent de stator vers la première bobine de la dent de stator suivante autour de chaque fois au moins un premier support de déviation qui est agencé à l'extérieur de l'espace de montage (14) situé entre deux dents (P) de stator adjacentes, et chaque dent (P) de stator recevant ensuite l'enroulement d'une deuxième bobine sur elle, le fil de bobinage (2) étant guidé à chaque fois depuis la deuxième bobine d'une dent de stator vers la deuxième bobine de la dent de stator suivante autour de chaque fois au moins un deuxième support de déviation différent du premier support de déviation, qui est agencé à l'extérieur de l'espace de montage (14) situé entre deux dents de stator adjacentes (P), ou **en ce que**
d. plusieurs bobines sont enroulées sur au moins une dent de stator ou **en ce que** plusieurs bobines sont enroulées chaque fois sur toutes les dents (P) de stator, une autre dent de stator recevant au moins une bobine enroulée sur elle chronologiquement entre le bobinage de deux bobines sur une dent de stator, et chaque dent de stator (P) recevant d'abord une première bobine enroulée sur elle, le fil de bobinage (2) étant guidé à chaque fois de la première bobine d'une dent de stator vers la première bobine de la dent de stator suivante autour de chaque fois au moins un premier support de déviation qui est agencé à l'extérieur de l'espace de montage (14) situé entre deux dents (P) de stator adjacentes, et les dents (P) de stator recevant ensuite chacune une deuxième bobine enroulée sur elle, et le fil de bobinage (2) étant guidé de la deuxième bobine d'une dent de stator vers la deuxième bobine de la dent suivante du stator autour de chaque fois au moins un deuxième support de déviation différent du premier support de déviation, qui est agencé à l'extérieur de l'espace de montage (14) situé entre deux dents (P) de stator adjacentes, et les premiers supports de déviation (ST) étant espacés axialement des deuxièmes supports de déviation (ST) et/ou **en ce que** les premiers supports de déviation (ST) et les deuxièmes supports de déviation (ST) sont agencés dans des plans différents, axialement espacés l'un de l'autre, ou **en ce que**
e. plusieurs bobines sont enroulées sur au moins une dent de stator ou **en ce que** plusieurs bobines sont enroulées chaque fois sur toutes les dents (P) de stator, au moins une autre dent de stator ayant au moins une bobine enroulée sur elle chronologiquement entre l'enroulement de deux bobines sur une dent de stator, les dents (P) de stator recevant d'abord chacune une première bobine enroulée sur elle, le fil de bobinage (2) étant chaque fois guidé de la première bobine d'une dent de stator vers la première bobine de la dent de stator suivante autour de chaque fois au moins un premier support de déviation qui est agencé à l'extérieur de l'espace de montage (14) situé entre deux dents (P) de stator adjacentes, et les dents (P) de stator recevant ensuite chacune une deuxième bobine enroulée sur elle, et le fil de bobinage (2) étant guidé de la deuxième bobine d'une dent de stator vers la deuxième bobine de la dent suivante du stator autour de chaque fois au moins un deuxième support de déviation différent du premier support de déviation, qui est agencé à l'extérieur de l'espace de montage (14) situé entre deux dents (P) de stator adjacentes, les premiers supports de déviation (ST) étant espacés axialement des deuxièmes supports de déviation (ST) et/ou les premiers supports de déviation (ST) et les deuxièmes supports de déviation (ST) étant agencés dans des plans différents, axialement espacés les uns des autres, et les dents de stator (P) recevant chacune, après l'enroulement des deuxièmes bobines (4), une troisième bobine enroulée sur elle, et le fil de bobinage (2) étant guidé à chaque fois depuis la troisième bobine d'une dent de stator vers la troisième bobine de la dent de stator suivante autour de chaque fois un troisième support de déviation, qui est différent du premier et du deuxième support de déviation et qui est agencé à l'extérieur de l'espace de montage (14) situé entre deux dents (P) de stator adjacentes, ou **en ce que**
f. plusieurs bobines sont enroulées sur au moins une dent de stator ou **en ce que** plusieurs bobines sont enroulées chaque fois sur toutes les dents de stator (P), au moins une autre dent de stator recevant au moins une bobine enroulée sur elle chronologiquement entre l'enroulement de deux bobines sur une dent de stator, les dents (P) de stator (recevant d'abord chacune une première bobine enroulée sur elle, le fil de bobinage (2) étant guidé à chaque fois de la première bobine d'une dent de stator vers la première bobine de la dent de stator suivante autour de chaque fois au moins un premier support de déviation qui est agencé à l'extérieur de l'espace de montage (14) situé entre deux dents (P) de stator adjacentes, et les dents (P) de stator recevant ensuite chacune une deuxième bobine enroulée sur elle, le fil de bobinage (2) étant guidé à chaque fois depuis la deuxième bobine d'une dent de stator vers la deuxième bobine de la dent de stator suivante autour de chaque fois au moins un deuxième support de déviation différent du premier support de déviation, qui est agencé à l'extérieur de l'espace de montage (14) situé entre deux dents (P) de stator adjacentes, les premiers supports de déviation (ST) étant espacés axialement des deuxièmes supports de déviation (ST) et/ou **en ce que** les premiers supports de déviation (ST) et les deuxièmes supports de déviation (ST) sont agencés dans des plans différents, espacés axialement les uns des autres, et les dents (P) de stator recevant chacune une troisième bobine enroulée sur elle après l'enroulement des deuxièmes bobines (4), et le fil de bobinage (2) étant guidé à chaque fois de la troisième bobine d'une dent de stator vers la troisième bobine de la dent de stator suivante autour de chaque fois un troisième support de déviation, qui est différent du premier et du deuxième support de déviation et qui est agencé à l'extérieur de l'espace de montage (14) situé entre deux dents (P) de stator (adjacentes, et les premiers et/ou les deuxièmes supports de déviation (ST) sont espacés axialement des troisièmes supports de déviation (ST), et/ou **en ce que** les premiers et/ou deuxièmes supports de déviation (ST) et les troisièmes supports de déviation (ST) sont agencés dans des plans différents, espacés axialement les uns des autres.

5. Procédé de fabrication d'un stator, **caractérisé en ce qu'**un paquet statorique (1) est d'abord fabriqué selon un procédé selon l'une des revendications 1 à 4, puis le fil de bobinage ininterrompu (2) est séparé en plusieurs endroits et plusieurs bobines respectives sont interconnectées.

6. Procédé selon la revendication 5, **caractérisé en ce que**
a. les bobines enroulées chacune sur une dent de stator sont reliées en parallèle les unes aux autres pour former un système de bobines, et/ou **en ce que**
b. dans la même étape de fabrication, aussi bien plusieurs bobines enroulées sur une dent de stator sont reliées en parallèle les unes aux autres pour former respectivement un système de bobines, qu'un montage en étoile des systèmes de bobines (18) est également réalisé, et/ou **en ce que**
c. plusieurs barres conductrices (10, 11, 12, 13) avec des languettes à crochet (15) sont placées sur le paquet statorique (1) côté frontal de telle sorte que les languettes à crochet (15) enserrent les sections du fil de bobinage (2) s'étendant en particulier chaque fois à l'extérieur de l'espace de montage (14) situé entre deux dents (P) de stator adjacentes, et/ou **en ce que**
d. plusieurs barres conductrices (10, 11, 12, 13) avec des languettes à crochet (15) sont placées sur le paquet statorique (1) côté frontal de telle sorte que les languettes à crochet (15) enserrent les sections du fil de bobinage (2) s'étendant en particulier chaque fois à l'extérieur de l'espace de montage (14) situé entre deux dents (P) de stator (adjacentes, et les languettes à crochet (15) sont soudées aux sections du fil de bobinage (2).

7. Paquet statorique (1) qui présente un élément de base complètement fermé circonférentiellement avec plusieurs dents (P) de stator, au moins une bobine en fil de bobinage (2) étant enroulée sur chaque dent (P) de stator, toutes les bobines étant enroulées avec le même fil de bobinage ininterrompu, le fil de bobinage (2) ne s'étendant pas directement d'une dent de stator à la suivante, mais étant agencé autour d'au moins un support de déviation de l'élément de base, qui est agencé à l'extérieur de l'espace de montage (14) situé entre deux dents (P) de stator adjacentes, **caractérisé en ce que** les sections de fil de bobinage du fil de bobinage (2) s'étendent exclusivement parallèlement les unes aux autres dans les espaces entre les dents (P) de stator et **en ce que** des croisements de sections de fil de bobinage sont agencés exclusivement à l'extérieur des espaces entre les dents de stator (P).

8. Paquet statorique (1) selon la revendication 7, **caractérisé en ce que**
a. des croisements sont agencés exclusivement à l'extérieur des espaces qui se raccordent axialement à l'espace de montage (14) situé entre les pôles adjacents du stator, et/ou **en ce que**
b. des croisements sont agencés exclusivement à l'extérieur des espaces qui se raccordent radialement à l'espace de montage (14) situé entre les pôles adjacents du stator.

9. Paquet statorique (1) selon la revendication 8, **caractérisé en ce que**
a. plusieurs bobines sont enroulées sur au moins une dent de stator ou **en ce que** plusieurs bobines sont enroulées sur toutes les dents (P) de stator, ou **en ce que**
b. une première bobine et une deuxième bobine sont enroulées sur chaque dent de stator et **en ce que** le fil de bobinage (2) est posé sur au moins un premier support de déviation sur son trajet entre une première bobine d'une dent de stator et la première bobine de la dent de stator adjacente, qui est agencé à l'extérieur de l'espace de montage (14) situé entre les dents de stator adjacentes (P), et **en ce que** le fil de bobinage (2), sur son trajet entre une deuxième bobine d'une dent de stator et la deuxième bobine de la dent de stator adjacente, est placé autour d'au moins un deuxième support de déviation qui est différent du premier support de déviation et qui est agencé à l'extérieur de l'espace de montage (14) situé entre les dents de stator adjacentes (P), ou **en ce que**
c. chaque fois une première bobine et une deuxième bobine sont enroulées sur chaque dent de stator et **en ce que** le fil de bobinage (2), sur son trajet entre une première bobine d'une dent de stator et la première bobine de la dent de stator adjacente, est placé autour d'au moins un premier support de déviation, qui est agencé à l'extérieur de l'espace de montage (14) situé entre les dents de stator adjacentes (P), et **en ce que** le fil de bobinage (2), sur son trajet entre une deuxième bobine d'une dent de stator et la deuxième bobine de la dent de stator adjacente, est placé autour d'au moins un deuxième support de déviation, qui est différent du premier support de déviation et qui est agencé à l'extérieur de l'espace de montage (14) situé entre les dents de stator adjacentes (P), les premiers supports de déviation (ST) étant espacés axialement des deuxièmes supports de déviation (ST) et/ou **en ce que** les premiers supports de déviation (ST) et les deuxièmes supports de déviation (ST) sont agencés dans des plans différents, axialement espacés l'un de l'autre, ou **en ce que**
d. une première bobine et une deuxième bobine sont enroulées respectivement sur chaque dent de stator et **en ce que** le fil de bobinage (2), sur son trajet entre une première bobine d'une dent de stator et la première bobine de la dent de stator adjacente, est placé autour d'au moins un premier support de déviation, qui est agencé à l'extérieur de l'espace de montage (14) situé entre les dents (P) de stator adjacentes, et **en ce que** le fil de bobinage (2), sur son trajet entre une deuxième bobine d'une dent de stator et la deuxième bobine de la dent de stator adjacente, est placé autour d'au moins un deuxième support de déviation qui est différent du premier support de déviation et qui est agencé à l'extérieur de l'espace de montage (14) situé entre les dents de stator adjacentes (P), les premiers supports de déviation (ST) étant espacés axialement des deuxièmes supports de déviation (ST) et/ou **en ce que** les premiers supports de déviation (ST) et les deuxièmes supports de déviation (ST) sont agencés dans des plans différents, espacés axialement les uns des autres, et chaque fois une troisième bobine est enroulée sur chaque dent de stator, et le fil de bobinage (2), est agencé, sur son trajet entre une troisième bobine d'une dent de stator et la troisième bobine de la dent de stator adjacente, autour d'un troisième support de déviation qui est agencé à l'extérieur de l'espace de montage (14) situé entre les dents de stator (P) adjacentes, ou **en ce que**
e. chaque fois une première bobine et une deuxième bobine sont enroulées sur chaque dent de stator et **en ce que** le fil de bobinage (2), sur son trajet entre une première bobine d'une dent de stator et la première bobine de la dent de stator adjacente, est placé autour d'au moins un premier support de déviation qui est agencé à l'extérieur de l'espace de montage (14) situé entre les dents de stator adjacentes (P), et **en ce que** le fil de bobinage (2), sur son trajet entre une deuxième bobine d'une dent de stator et la deuxième bobine de la dent de stator adjacente, est placé autour d'au moins un deuxième support de déviation qui est différent du premier support de déviation et qui est agencé à l'extérieur de l'espace de montage (14) situé entre les dents de stator adjacentes (P), les premiers supports de déviation (ST) étant espacés axialement des deuxièmes supports de déviation (ST) et/ou **en ce que** les premiers supports de déviation (ST) et les deuxièmes supports de déviation (ST) sont agencés dans des plans différents, axialement espacés les uns des autres, et **en ce que** chaque fois une troisième bobine est enroulée sur chaque dent de stator et **en ce que** le fil de bobinage (2), sur son trajet entre une troisième bobine d'une dent de stator et la troisième bobine de la dent de stator adjacente, est posé autour d'un troisième support de déviation, qui est agencé à l'extérieur de l'espace de montage (14) situé entre les dents (P) de stator adjacentes, et les premiers et/ou deuxièmes supports de déviation sont espacés axialement des troisièmes supports de déviation (ST) et/ou **en ce que** les premiers et/ou deuxièmes supports de déviation (ST) et les troisièmes supports de déviation (ST) sont agencés dans des plans différents, espacés axialement les uns des autres.

10. Paquet statorique (1) selon la revendication 8 ou la revendication 9, **caractérisé en ce que**
a. les dents (P) de stator sont réalisées de manière étagée, ou **en ce que**
b. les dents (P) de stator sont réalisées de manière étagée dans la direction radiale, ou **en ce que**
c. les dents (P) de stator (présentent des sections de circonférence différente, ou **en ce que**
d. les dents (P) de stator présentent des sections de circonférence différente, les sections situées plus à l'intérieur dans le sens radial ayant un diamètre plus grand que les sections situées plus à l'extérieur dans le sens radial.

11. Stator fabriqué au moyen d'un paquet statorique (1) selon l'une des revendications 8 à 10.

12. Stator selon la revendication 11, **caractérisé en ce que**
a. le stator comporte sur sa face frontale plusieurs, en particulier exactement quatre, barres conductrices (10, 11, 12, 13) avec des languettes à crochet (15), les languettes à crochet (15) entourant des parties du fil de bobinage (2) s'étendant en particulier chaque fois à l'extérieur de l'espace de montage (14) situé entre deux dents (P) de stator adjacentes et étant reliées de manière électriquement conductrice, en particulier soudées, à celles-ci, ou **en ce que**
b. le stator comprend, sur sa face frontale, plusieurs, en particulier exactement quatre, barres conductrices (10, 11, 12, 13) avec des languettes à crochet (15), les languettes de crochet (15) enserrant des sections du fil d'enroulement (2) s'étendant en particulier chacune à l'extérieur de l'espace de montage (14) situé entre deux dents de stator adjacentes (P) et étant reliées à celles-ci de manière électroconductrice, notamment soudées, les barres conductrices 10, 11, 12, 13 étant agencées au moins partiellement l'un sur l'autre dans la direction axiale.

13. Stator selon la revendication 11 ou 12, **caractérisé en ce que**
a. les bobines enroulées respectivement sur une dent de stator sont montées en parallèle les unes aux autres, et/ou **en ce que**
b. plusieurs bobines sont interconnectées dans un montage en étoile, ou **en ce que** plusieurs bobines globales sont interconnectées dans un montage en étoile.

14. Moteur électrique comprenant un stator selon l'une des revendications 11 à 13.

15. Moteur électrique selon la revendication 14, **caractérisé en ce que**
a. le moteur électrique est un moteur électrique triphasé avec un montage en étoile, et/ou **en ce que**
b. le stator comporte 12 dents (P) de stator et/ou **en ce que** le rotor comporte 10 ou 14 aimants.
